# FASCICULE DE BREVET EUROPEEN

(11) **EP 2 223 153 B1**
(45) Date de publication et mention de la délivrance du brevet: **08.02.2012**
(21) Numéro de dépôt: 08862339.2
(22) Date de dépôt: 15.12.2008
(51) Int. Cl.: G01S 13/02, G01S 13/89, G01S 7/41

(54) **PROCEDE ET SYSTEME D'AIDE A LA CARACTERISATION D'ENVIRONNEMENT PAR DES SIGNAUX RADIOFREQUENCE ULTRA LARGE BANDE**
VERFAHREN UND SYSTEM ZUR UNTERSTÜZUNG VON UMWELTCHARAKTERISIERUNG MITTELS ULTRABREITBAND-HOCHFREQUENZSIGNALEN
METHOD AND SYSTEM FOR AIDING ENVIRONMENTAL CHARACTERIZATION BY ULTRA-WIDEBAND RADIOFREQUENCY SIGNALS

(30) Priorité: 18.12.2007 FR 0708831
(43) Date de publication de la demande: 01.09.2010
(73) Titulaire: Commissariat à l'Énergie Atomique et aux Énergies Alternatives, 75015 Paris (FR)
(72) Inventeur: DENIS, Benoît, F-38000 Grenoble (FR); LATOSA, Vincenzo, F-71043 Manfredonia (FR); UGUEN, Bernard, F-35530 Servon Sur Vilaine (FR); TCHOFFO-TALOM, Friedman, F-29290 Saint Renan (FR)
(74) Mandataire: Guérin, Michel
(86) Numéro de dépôt international: PCT/EP2008/067569
(87) Numéro de publication internationale: WO 2009/077510

(56) Documents cités:
- WO-A-2007/134410
- US-A1- 2004 178 942
- DUMANIAN A J ET AL: "Enhanced Detection and Classification of Buried Mines with an UWB Multistatic GPR" ANTENNAS AND PROPAGATION SOCIETY SYMPOSIUM, 2005. IEEE WASHINGTON, DC, JULY 3 - 8, 2005, PISCATAWAY, NJ : IEEE, US, vol. 3B, 3 juillet 2005 (2005-07-03), pages 88-91, XP010860113 ISBN: 978-0-7803-8883-3
- WENYU GUO ET AL: "Indoor Mapping and Positioning Using Impulse Radios" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), pages 153-163, XP010924855 ISBN: 978-0-7803-9454-4
- YVES LOSTANLEN ET AL: "Introduction of diffuse scattering to enhance ray-tracing methods for the analysis of deterministic indoor UWB radio channels (Invited Paper)" ELECTROMAGNETICS IN ADVANCED APPLICATIONS, 2007. ICEAA 2007. INTERNATI ONAL CONFERENCE ON, IEEE, PI, 1 septembre 2007 (2007-09-01), pages 903-906, XP031163874 ISBN: 978-1-4244-0766-8

## Description

L'invention concerne les réseaux de communication sans fil exploitant la technologie Ultra-large bande (ULB, ou encore UWB en sigle anglais pour "Ultra Wide Band").

Les signaux radiofréquence UWB sont des signaux dont la largeur de bande (définie à -10dB du maximum de la densité spectrale de puissance) est supérieure à 500 MHz ou à 20% de la fréquence centrale. En particulier, certains systèmes, qualifiés d'impulsionnels (Impulse Radio - UWB en langue anglaise), prévoient la transmission de trains codés et/ou modulés d'impulsions brèves (de l'ordre de la ns).

La technologie UWB est en passe de s'imposer comme couche physique privilégiée de réseaux de communication numérique sans-fil courte et moyenne portée, tels que les réseaux personnels sans-fil ou WPANs (pour Wireless Personal Area Networks) et les réseaux de capteurs ou WSN (pour Wireless Sensor Networks en langue anglaise).

La présente invention propose d'incorporer à un réseau de communication sans fil UWB des moyens pour aider à la caractérisation de l'environnement dans lequel se trouvent les noeuds émetteurs/récepteurs du réseau, soit à des fins d'optimisation du réseau de communication UWB, soit à d'autres fins liées par exemple à l'exploitation de la connaissance de la configuration de l'environnement (par exemple la configuration géométrique des murs, leurs matériaux constitutifs) dans le but de fournir des services intégrés au sein d'un réseau de communication.

Dans le premier cas, où on veut aider à l'optimisation d'un réseau UWB, on comprend qu'il est particulièrement indiqué d'obtenir une information sur des caractéristiques physiques, notamment géométriques, de l'environnement (présence d'obstacles à la transmission qui atténuent les signaux, présence d'objets réflecteurs qui perturbent la transmission en créant des multi-trajets). Ceci permet par exemple qu'un réseau s'adapte mieux à son environnement en prenant en compte l'environnement réel dont il a lui-même repéré les caractéristiques ; l'adaptation peut se faire par exemple en utilisant en réception des filtres adaptés au canal de transmission ou en agissant sur le routage des communications dans le réseau.

Dans le second cas, on veut acquérir des informations sur l'environnement dans le but de fournir un service supplémentaire aux utilisateurs du réseau. Des émetteurs/récepteurs radio UWB faisant partie d'un réseau de communication UWB déterminent alors une configuration géométrique (présence de murs, de cloisons, position, etc.) et électromagnétique (c'est-à-dire la nature de ces murs) de l'environnement ; cela peut être dans le but de déterminer si l'environnement se trouve dans un état potentiellement dangereux ou dans le but de détecter une modification de la configuration (par exemple une intrusion) ; cela peut être aussi dans le but d'informer les autres noeuds potentiellement éloignés du réseau sur l'état actuel de l'environnement. Ces noeuds peuvent ensuite traiter les informations dépendantes de la topologie de l'environnement avec d'autres données mesurées en différents points du réseau de capteurs (par exemple, température, pression, etc.).

Par l'expression "caractérisation de l'environnement", on entend la détermination de configurations ou de changements de configuration des éléments physiques qui sont présents dans l'environnement des noeuds émetteurs-récepteurs du réseau de communication.

Dans l'art antérieur, on a déjà proposé de faire de la cartographie radio à l'intérieur de bâtiments (en anglais : "indoor mapping") au moyen d'émetteurs-récepteurs dédiés à cette cartographie mais pas en utilisant un réseau de communications en place ayant un autre but que cette cartographie. Cette cartographie se fonde sur une analyse des échos d'impulsions envoyées par un émetteur. Les instants d'arrivée des différents échos multi-trajets résolus par le récepteur sont associés aux multiples réflexions qui ont pu se produire entre l'émission et la réception. Ces réflexions se produisent sur des parois dont il est alors possible de déterminer la position relative et l'orientation par rapport à un couple émetteur/récepteur (potentiellement co-localisés) au moyen de relations géométriques simples. L'article de W. Guo et N.P. Filer "2D Indoor Mapping and Location Sensing Using an Impulse Radio Network" dans IEEE Seminar on Ultra Wideband Systems, technologies and Applications, 2006 pp. 211-215 Londres, Avril 2006, ou également l'article de W. Guo, N.P. Filer et R. Zetik, intitulé "Indoor Mapping and Positioning Using Impulse Radios" dans IEEE Position Location and Navigation Symposium, pp 153-163, Avril 2006, proposent ce type de méthode.

Une autre technique a également été proposée : elle consiste à utiliser une multiplicité de récepteurs dédiés à la caractérisation, à des positions connues pour déterminer la présence et la position, dans l'environnement, d'objets susceptibles de réfléchir les ondes. Voir par exemple R. Zetik, J. Sachs, R. Thöma, "Imaging of Propagation Environment by UWB Channel Sounding", COST 273 TD(05) 058, Bologne, janvier 2005.

On a utilisé aussi des techniques de signature d'environnement dans lequel se trouve un récepteur : dans une phase d'apprentissage, on collecte des profils de puissance reçue en fonction du temps pendant l'émission d'impulsions par un émetteur, et ceci en plaçant des récepteurs dans plusieurs régions de l'espace. On stocke des profils moyens pour chaque région de l'espace, et, lors de l'utilisation d'un récepteur, on compare un profil de puissance reçue aux profils préalablement stockés, pour en déduire dans quelle région de l'espace se trouve probablement le récepteur. Voir par exemple l'article de F. Althaus, F. Troesch et A. Wittneben, "UWB Geo-Regioning in Rich Multipath Environment, IEEE 2005.

On a également proposé des méthodes sophistiquées utilisant des réseaux de neurones pour reconnaître des motifs de trajets multiples résolus en réception, dans le but de permettre un positionnement du récepteur dans un environnement préétabli. Voir par exemple C. Nerguizian, C. Despins, S. Affes, "Geolocation in Mines with an Impulse Response Fingerprinting Technique and Neural Networks", IEEE VTC04-Fall, Los Angeles, vol. 5 p3589-3594, Septembre 2004.

Toutes ces techniques sont des techniques spécifiques de détection, utilisant des émetteurs ou récepteurs dédiés à la détection d'objets de l'environnement.

D'autres exemples de systèmes radiofréquence de reconstruction d'environnement ont également été proposés, par exemple dans la demande de brevet EP 2003/721985 ou dans la demande de brevet US 2006 405167A. Ces systèmes n'exploitent pas la caractéristique de déformation d'une impulsion suite au rayonnement ou à la captation par une antenne UWB.

Dans la demande de brevet US 2006 405167A "Method and apparatus for utilizing RF signals to create a site specific representation of an environment", il est décrit une méthode comprenant l'estimation de la distance parcourue par l'onde entre l'émetteur et le récepteur au cours d'émissions successives pendant lesquelles on fait tourner une antenne d'émission de 5° en 5° de manière à balayer un espace d'observation. L'algorithme décrit dans cette demande antérieure prévoit d'effectuer préalablement une estimation de la distance parcourue (par exemple sur la base d'une mesure du temps de vol aller-retour du signal transmis), puis un bilan de liaison tenant compte du gain (en puissance) des antennes et des pertes de propagation (path loss en langue anglaise), et enfin d'associer les pertes énergétiques supplémentaires observées en réception (c'est-à-dire les pertes supplémentaires par rapport au bilan initial) au type de canal, voire aux phénomènes d'interaction électromagnétique. Cet algorithme ne prend pas en compte la déformation d'impulsions pour en déduire des caractéristiques d'environnement.

Enfin, dans la demande de brevet US 2003 714046A, la détermination d'angles de réception repose sur l'utilisation d'un réseau de n antennes, capables d'associer le signal reçu à l'un des 2n secteurs délimités par les antennes elles-mêmes. La détermination de déformations de formes d'onde impulsionnelles n'est pas suggérée.

US 2004/0178942 A1 divulgue un procédé de calcul de la position d'un objet au moyen des signatures radioélectriques UWB des objets connus, qui sont stockées dans une base de données. Les techniques de l'art antérieur permettent une caractérisation d'environnement (parfois grossière), mais elles utilisent des émetteurs et récepteurs dédiés à cette caractérisation et non un réseau de communications à multiples noeuds dédié principalement à la communication d'informations entre noeuds. Par ailleurs, aucune des méthodes citées ci-dessus ne s'appuie sur les déformations subies par les formes d'onde associées aux trajets résolus en réception.

La présente invention se fonde sur les considérations suivantes : si une impulsion radiofréquence est appliquée par un émetteur à une antenne d'émission, elle va parvenir au récepteur en étant plus ou moins déformée non seulement en raison de la fonction de transfert de l'antenne d'émission et l'antenne de réception mais aussi en fonction de la présence d'obstacles réfléchissants, ou diffractants, ou absorbants, sur son trajet, et en fonction de la nature de ces obstacles ; par exemple, un mur de briques va réfléchir l'onde en la déformant d'une certaine manière, alors qu'un mur de béton, une porte en bois, ou une fenêtre en verre vont produire une autre déformation. De la même manière, une absorption de l'onde ou une diffraction sur un coin de paroi vont produire d'autres déformations. Les déformations sont donc liées à des types d'interaction entre l'onde et l'environnement. En stockant dans une mémoire certaines déformations de signal possibles, par catégorie d'interaction entre l'onde et un obstacle, on pourra ultérieurement comparer une forme d'onde reçue avec des formes stockées, c'est-à-dire avec des formes d'onde prédites liées à des interactions identifiées au préalable. Cette base de données de formes d'onde, définies comme "formes d'onde élémentaires", peut être complétée par un organe de prédiction à la volée, s'appuyant sur des descripteurs de caractéristiques électromagnétiques de matériaux différents, notamment les fonctions de transfert, dans le domaine fréquentiel, des matériaux en fonction de la direction d'incidence à la surface (*a priori* déterministe) ainsi que sur la connaissance de certaines distributions de probabilité relatives aux caractéristiques géométriques (*a priori* statistiques). Une portion de forme d'onde reçue pourra ainsi être considérée comme résultant d'une interaction probable et on considérera qu'un obstacle dont le matériau correspond à la forme prédite est probablement présent dans l'environnement. En complétant l'information ainsi obtenue par une analyse de la position temporelle de la portion de forme d'onde qui a donné lieu à ce résultat, on peut obtenir une information de temps de propagation, donc une information de position relative d'obstacle (par rapport à la liaison radio). Cette comparaison de formes d'onde reçue avec des formes d'onde prédites peut être faite pour plusieurs portions successives d'un même signal reçu, ces différentes portions correspondant à divers trajets de l'onde électromagnétique en cas d'interactions multiples. Enfin, il faut comprendre que les antennes d'émission ou de réception UWB ont un diagramme spatial de rayonnement non uniforme dans la bande de fonctionnement et que les déformations de signal qui en résultent dans le domaine temporel sont aussi liées à la direction d'émission et à la direction de réception, de sorte qu'on peut stocker des formes prédites pour diverses directions, comparer le signal reçu aux formes prédites, et en déduire des directions d'émission et de réception de l'onde. On a pu constater qu'une telle technique peut parfaitement être mise en oeuvre au sein même d'un réseau de communication UWB plutôt que d'être effectuée par un système de détection qui serait spécifiquement conçu pour la caractérisation d'environnement.

Si on synthétise le procédé nouveau selon l'invention, on peut dire par conséquent qu'on propose ici un procédé d'aide à la caractérisation d'environnement utilisant un réseau de communication sans fil multi-noeuds (c'est-à-dire au moins deux noeuds, mais en pratique au moins trois noeuds) ultra-large bande servant à des fins de communication autres que l'émission d'impulsions liées à la caractérisation d'environnement, le procédé comprenant l'émission de signaux radiofréquences impulsionnels à ultra-large bande (UWB) par un noeud radio-émetteur disposant d'une antenne d'émission et la réception de signaux correspondants par un noeud radiorécepteur disposant d'une antenne de réception, le procédé comportant :
- le stockage, dans une mémoire associée au récepteur, d'une série de descripteurs de formes d'onde élémentaires prédites, chaque descripteur correspondant à une forme d'onde élémentaire attendue dans le récepteur pour une interaction déterminée entre l'onde électromagnétique émise par l'antenne d'émission et des surfaces potentiellement présentes dans l'environnement et pouvant affecter la transmission de cette onde dans son trajet jusqu'à sa réception par le récepteur,
- la numérisation du signal reçu et la détermination d'une ou plusieurs portions temporelles de la forme d'onde de signal reçu qui, en raison de leur distribution temporelle d'énergie, sont susceptibles de contenir une des formes d'onde prédites,
- la comparaison entre d'une part un descripteur du signal reçu pour au moins une de ces portions temporelles et d'autre part plusieurs descripteurs de formes d'onde prédites stockés dans la mémoire ou calculés à la volée à partir des descripteurs stockés,
- la sélection d'au moins un descripteur pour lequel la comparaison indique une ressemblance entre la forme prédite et la portion temporelle de forme reçue,
- le stockage d'une information sur le descripteur ainsi sélectionné, représentant une information de présence, et de position dans l'environnement, d'un objet remarquable qui cause une interaction correspondant à l'interaction associée au descripteur sélectionné. Le procédé selon l'invention est défini par la revendication 1.

La série de signaux impulsionnels est de préférence une série émise pendant l'en-tête d'un message de communication envoyé par le noeud radio émetteur sur le réseau et reçue par le noeud radio récepteur, de manière à pouvoir effectuer une caractérisation d'environnement même pendant l'utilisation courante (à d'autres fins que la caractérisation) du lien de communication.

Chaque descripteur de forme d'onde est le résultat d'une transformation appliquée à une forme d'onde numérisée.

Les formes d'onde prédites sont obtenues à partir d'une caractérisation préalable des antennes (mesures ou simulations), et au moyen d'un calcul intégrant les effets de filtrage dus à certains historiques d'interaction.

Les descripteurs de forme d'onde peuvent être constitués par une représentation numérique d'une forme d'onde dans le domaine temporel ; mais ils peuvent être aussi constitués par d'autres représentations que la forme d'onde temporelle elle-même, par exemple une représentation vectorielle de caractéristiques significatives de la forme d'onde, ou encore une représentation non temporelle, par exemple une représentation dans l'espace des fréquences, telle qu'une transformée de Fourier de la forme d'onde. Les formes d'onde prédites sont obtenues par des mesures préalables et/ou à l'aide de simulations par calcul.

Un descripteur de forme d'onde prédite peut être associé à un couple de directions déterminé, par exemple dans le cas de la prédiction d'une forme d'onde correspondant à un trajet direct. Si l'on restreint le contexte d'application à un simple cas bidimensionnel, ces directions correspondent respectivement à un angle d'émission AE possible, référencé par rapport à un axe caractéristique de l'antenne d'émission, et un angle de réception AR possible, référencé par rapport à un axe caractéristique de l'antenne de réception, la forme d'onde associée à ce descripteur étant la forme d'onde de signal prédite dans le cas où l'antenne de réception reçoit sous l'angle AR une onde électromagnétique impulsionnelle émise par l'antenne d'émission sous l'angle AE. De manière générale, on stockera des formes d'onde prédites pour divers couples de directions, de même qu'on pourra considérer divers matériaux d'obstacles réflecteurs (pour chaque couple de directions) et plusieurs angles d'incidence sur ces obstacles, de façon à pouvoir disposer d'une base de données de formes d'onde élémentaires indexée sur le groupe ou quartet de quatre paramètres AE, AR, matériau et angle d'incidence. On pourra également avoir en mémoire les descripteurs des caractéristiques électromagnétiques de différents matériaux (a priori déterministe) ainsi que certaines distributions de probabilité relatives aux caractéristiques géométriques (*a priori* statistique). Comme on l'a déjà indiqué, au lieu de l'intégralité de la forme d'onde numérisée, on peut envisager d'autres descripteurs de formes d'onde, par exemple sous forme de caractéristiques fréquentielles représentatives, pour chaque couple AE/AR et pour un matériau sous une incidence donnée. Ces descripteurs alternatifs pourraient nourrir un algorithme d'estimation de la forme d'onde la plus ressemblante (et/ou des paramètres qui lui sont associés, tels que les angles AE/AR), au moyen de relations non linéaires. En effet, la nature complexe de certaines interactions électromagnétiques réelles pourrait être interprétée plus pertinemment par des outils d'estimation non linéaire comme, par exemple, des réseaux de neurones.

L'information de présence et de position d'obstacle, qui est stockée après un résultat positif de comparaison avec les formes d'onde prédites, représentera le plus souvent une position et une orientation de surface réfléchissante pour les ondes électromagnétiques, la position étant l'intersection d'une droite passant par l'antenne d'émission et dirigée selon la direction d'émission AE correspondant au descripteur sélectionné et d'une droite passant par l'antenne de réception et dirigée selon la direction de réception AR correspondant au descripteur sélectionné, et l'orientation de la surface réfléchissante étant celle d'un plan perpendiculaire à la bissectrice de ces deux droites. De façon équivalente, puisqu'on cherche à estimer les angles d'incidence, les surfaces réfléchissantes peuvent être estimées comme étant les surfaces orthogonales aux bissectrices des angles d'incidence.

On notera que pour un trajet d'onde avec une seule réflexion sur l'obstacle réfléchissant, cette position d'obstacle remarquable est déterminée grâce aux directions caractéristiques du descripteur identifié, sans avoir besoin de la connaissance de la position temporelle de la portion d'onde reçue qui a donné lieu à une comparaison. Toutefois, on peut aussi utiliser cette connaissance de la position temporelle pour établir ou confirmer l'information de position de l'objet remarquable ; en effet, la position temporelle est liée à un temps de propagation d'onde, et le temps de propagation représente la distance entre l'émetteur et le récepteur le long du trajet réfléchi par l'obstacle.

Cette détermination de caractéristiques de l'environnement sera de préférence effectuée en traitant des impulsions successives émises par l'antenne d'émission. Si l'antenne d'émission et l'antenne de réception sont portées par deux noeuds d'un réseau de communication fonctionnant en UWB, une série d'impulsions peut être par exemple émise pendant l'en-tête d'un message de communication envoyé par l'émetteur au récepteur (par exemple un en-tête de synchronisation et/ou d'estimation de canal), de manière à effectuer une caractérisation d'environnement pendant l'utilisation courante du lien de communication entre l'antenne d'émission et l'antenne de réception.

Dans le cas où l'antenne d'émission émet plusieurs signaux impulsionnels successifs identiques décalés d'intervalles de temps déterminés, on effectue de préférence une intégration cohérente des signaux reçus en compensant au niveau du récepteur les intervalles de temps qui les séparent, pour produire un signal reçu équivalent ayant un rapport signal/bruit amélioré, et on utilise la forme d'onde de ce signal reçu équivalent pour effectuer les comparaisons avec les formes d'onde prédites.

De préférence, après sélection d'un descripteur particulier pour une portion temporelle déterminée de la forme d'onde reçue, on soustrait à la forme d'onde reçue la forme d'onde prédite correspondant à ce descripteur, en la calant sur cette portion temporelle, et on recommence la détermination de portions temporelles et la comparaison avec des formes prédites en utilisant comme signal reçu le résultat de cette soustraction. Cette soustraction peut être faite de manière itérative en recommençant à chaque fois une détermination de portions temporelles, une comparaison avec des formes prédites, et une sélection de descripteur.

Une impulsion attaquant l'antenne d'émission peut par exemple avoir la forme temporelle d'une sinusoïde multipliée par une fonction gaussienne.

Enfin, on notera que la comparaison entre la forme d'onde extraite du signal reçu et les formes d'onde prédites (dont les descripteurs sont dans la mémoire) peut se faire en comparant des descripteurs stockés dans la mémoire et des descripteurs analogues, calculés à la volée par le récepteur à partir de la forme d'onde reçue. Il est également possible de prévoir que les descripteurs de formes d'onde stockés dans la mémoire du récepteur soient des descripteurs simples, décrivant seulement des formes d'onde élémentaires, un organe de prédiction de descripteurs de formes d'onde complexes étant prévu dans le récepteur pour constituer des descripteurs plus complexes à partir des descripteurs simples de formes d'onde élémentaires et de descripteurs simples de caractéristiques électromagnétiques de matériaux ; les deux ensembles de descripteurs simples sont contenus dans la mémoire, et c'est au moment des recherches de ressemblance que des descripteurs plus complexes sont élaborés en vue de cette recherche.

Outre le procédé qui vient d'être défini, l'invention propose aussi un système permettant de mettre en oeuvre le procédé. Le système selon l'invention est un système de communications sans fil comprenant un réseau de plusieurs noeuds d'émission/réception ultra-large bande (c'est-à-dire au moins deux noeuds, mais en pratique au moins trois noeuds, pour constituer véritablement un réseau), parmi lesquels au moins un noeud disposant d'une antenne d'émission capable d'émettre des signaux de communication impulsionnels et un noeud disposant d'une antenne de réception capable de recevoir les signaux ainsi émis, le système comportant :
- une mémoire contenant une série de descripteurs de formes d'onde de signal prédites, chaque descripteur correspondant à une forme d'onde de signal attendu au récepteur pour une interaction déterminée entre l'onde électromagnétique émise par l'antenne d'émission et des surfaces potentiellement présents dans l'environnement qui peuvent affecter la transmission de cette onde dans son trajet jusqu'à sa réception par le récepteur,
- des moyens de numérisation de la forme d'onde d'un signal reçu et des moyens pour déterminer une ou plusieurs portions temporelles de la forme d'onde de signal reçu qui, en raison de leur distribution temporelle d'énergie, sont susceptibles de contenir une des formes d'onde prédites,
- des moyens de comparaison entre d'une part un descripteur de la forme d'onde extraite du signal reçu pour au moins une de ces portions temporelles et d'autre part des descripteurs, dont ceux contenus dans la mémoire, de plusieurs formes d'onde prédites,
- des moyens pour sélectionner au moins un descripteur pour lequel la comparaison indique une ressemblance entre le descripteur de la forme d'onde prédite et le descripteur de la portion temporelle du signal reçu,
- et des moyens pour stocker une information sur le descripteur ainsi sélectionné, représentant une information de présence et de position dans l'environnement d'un objet remarquable qui cause une interaction correspondant à l'interaction associée au descripteur sélectionné.

Le système peut comprendre des moyens pour éliminer éventuellement un ou plusieurs descripteurs parmi ceux qui ont été sélectionnés, car donnant lieu à des aberrations géométriques, c'est-à-dire des configurations impossibles. Il peut aussi comprendre des moyens pour élire et stocker un ou plusieurs descripteurs parmi ceux qui ont été sélectionnés en tant que quartet estimé des variables AR, AE, matériau et angles d'incidence. Egalement, le système peut comprendre des moyens de traitement des descripteurs retenus pour chaque trajet détecté, afin de déduire une configuration de l'environnement, c'est-à-dire une information de présence et de position d'un ou plusieurs objets de dimensions remarquables qui causent une interaction correspondant aux interactions associées aux descripteurs retenus. Le système selon l'invention est défini par la revendication 12.

A titre d'exemple, un moyen de traitement des descripteurs retenus peut être un filtre de Kalman étendu, en considérant l'observation d'au moins une des variables AE, AR, matériau et angles d'incidences des trajets détectés comme une ou des fonctions de l'état « configuration particulière d'environnement » à estimer. Les observations peuvent varier dans le temps suite au déplacement d'un ou plusieurs noeuds de communication sans fil.

Un descripteur de forme d'ondes peut correspondre à des caractéristiques représentatives (fréquentielles, par exemple) pour des couples de direction d'émission (AE) et direction de réception (AR) et pour un matériau sous une incidence donnée, au lieu de l'intégralité de la forme d'onde numérisée. La mémoire peut aussi contenir des descripteurs des caractéristiques électromagnétiques de différents matériaux (*a priori* déterministe) ainsi que certaines distributions de probabilité relatives aux contraintes géométriques (*a priori* statistiques).

L'invention permet de nombreuses applications. Par exemple, un réseau sans fil UWB de capteurs de gaz dangereux peut calibrer la sévérité d'une alarme en fonction de la densité de gaz dans l'air (mesurée en chaque noeud) et transmise par une communication ordinaire à travers le réseau, mais aussi en fonction du volume de l'environnement local, estimé par la fonction de caractérisation d'environnement.

Ou encore, le même réseau de capteurs sans fil, fort de la fonctionnalité de caractérisation d'environnement, peut déclencher une alarme seulement lorsque une densité de gaz seuil (mesurée par un noeud) est dépassée et lorsque une modification d'environnement (par exemple une intrusion) se produit (fonction de caractérisation d'environnement) simultanément.

De nombreuses autres applications peuvent être trouvées dans la robotique, la détection d'intrusion, le contrôle d'environnement en milieu dangereux, la sécurité, etc.

D'autres caractéristiques et avantages de l'invention apparaîtront à la lecture de la description détaillée qui suit et qui est faite en référence aux dessins annexés dans lesquels :
- la figure 1 représente une forme de signal reçu après transmission d'une onde électromagnétique impulsionnelle UWB à travers un mur, en fonction de l'épaisseur de ce dernier ;
- la figure 2 représente une forme de signal reçu après transmission d'une onde électromagnétique impulsionnelle UWB réfléchie par un mur, en fonction de la permittivité relative du matériau constituant le mur ;
- la figure 3 représente une forme de signal reçu après transmission d'une onde électromagnétique impulsionnelle UWB réfléchie par un mur, en fonction de la conductivité électrique du matériau constituant le mur ;
- la figure 4 représente le signal reçu après transmission d'une onde électromagnétique impulsionnelle UWB réfléchie par un mur, en fonction de l'épaisseur du mur ;
- la figure 5 représente le signal impulsionnel reçu en fonction d'un angle d'incidence de l'onde sur le récepteur ;
- la figure 6 représente une forme d'onde composite reçue dans le cas où une impulsion UWB a subi de multiples trajets avant d'arriver sur le récepteur ;
- la figure 7 représente la décomposition de la forme d'onde de la figure 6 pour mieux montrer l'influence de chacun des trajets ;
- la figure 8 représente d'une part un signal composite reçu dans une configuration de test bidimensionnel, faisant apparaître clairement des impulsions successives reçues après des multiples trajets, et d'autre part une forme impulsionnelle unique prédite correspondant à une interaction identifiée sur l'un des trajets ;
- la figure 9 représente un diagramme de valeurs maximales d'inter-corrélation en fonction d'un angle d'émission et d'un angle de réception, en vue de l'identification d'un trajet correspondant à l'une des impulsions isolables du signal composite de la figure 8 ;
- la figure 10 représente d'une part un signal composite résultant de la soustraction du signal composite de la figure 8 et de la forme impulsionnelle prédite, et d'autre part une nouvelle forme impulsionnelle prédite correspondant à une interaction identifiée sur un autre trajet ;
- la figure 11 1 représente un diagramme de valeurs maximales d'inter-corrélation en fonction d'un angle d'émission et d'un angle de réception, en vue de l'identification d'un trajet correspondant à une impulsion isolable du signal composite de la figure 10, c'est-à-dire après une soustraction ;
- la figure 12 représente le système d'aide à la caractérisation d'environnement selon l'invention, placé dans une pièce à quatre murs ;
- la figure 13 représente un diagramme des opérations effectuées dans un mode de mise en oeuvre du procédé selon l'invention ;
- la figure 14 représente un diagramme des opérations plus précisément pour la fonction d'estimation d'angles.

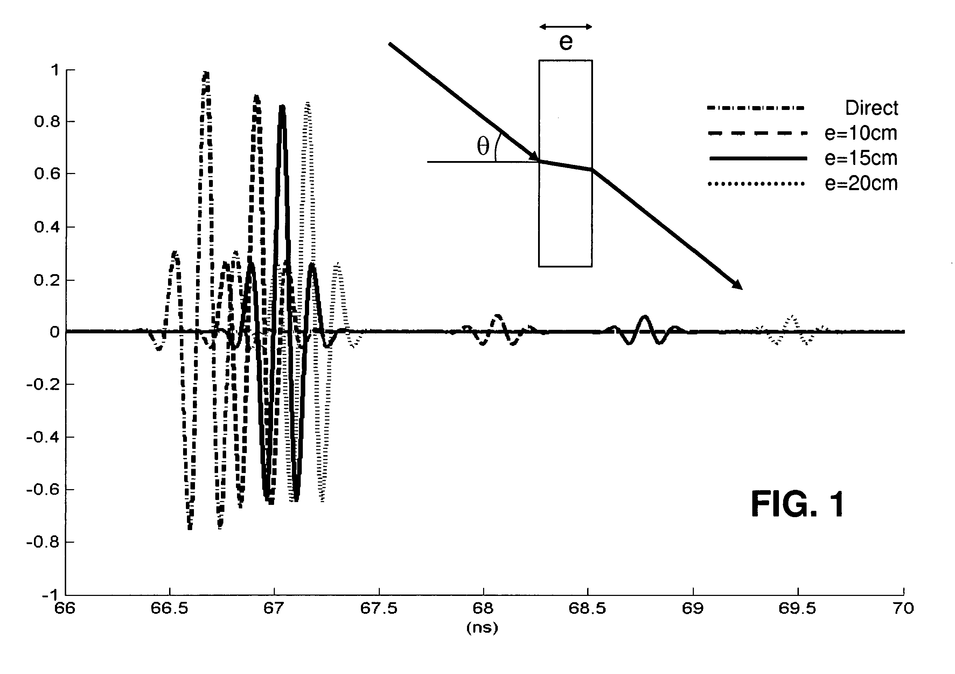

Pour mieux faire comprendre un des principes sur lesquels repose la présente invention, on a représenté de manière schématique aux figures 1 à 5 des interactions possibles entre une onde électromagnétique UWB et un mur, et des exemples de formes d'onde qui peuvent en résulter dans le récepteur.

Sur la figure 1, un émetteur envoie vers le mur, sous une incidence θ, une impulsion ayant la forme d'une sinusoïde multipliée par une fonction gaussienne. Le choix de cette impulsion est arbitraire et n'altère pas le caractère général des phénomènes observés. Le récepteur est placé de l'autre côté du mur pour recevoir l'onde qui a traversé le mur. Les formes d'onde correspondantes et notamment les retards de propagation dépendent essentiellement de l'épaisseur e du mur. On a superposé sur la figure 1 la forme d'onde obtenue dans un trajet direct (absence de mur ou épaisseur de mur nulle) et les formes d'onde obtenues pour une épaisseur de mur de 10 centimètres, 15 centimètres, et 20 centimètres respectivement, dans le cas d'un matériau dont les caractéristiques diélectriques sont les suivantes : permittivité relative égale à 3 et conductivité égale à 0,0012 ohm⁻¹.m⁻¹, et pour un angle θ=0°.

On voit que les impulsions reçues sont différentes dans ces quatre cas. On n'a pas fait varier la direction d'incidence mais on pourrait vérifier que la forme d'onde reçue dépend également de l'incidence. Selon la structure interne du mur, on aura des déformations et retards plus ou moins importants, qui sont dus à des réflexions internes dans le mur qui se superposent à l'onde principale.

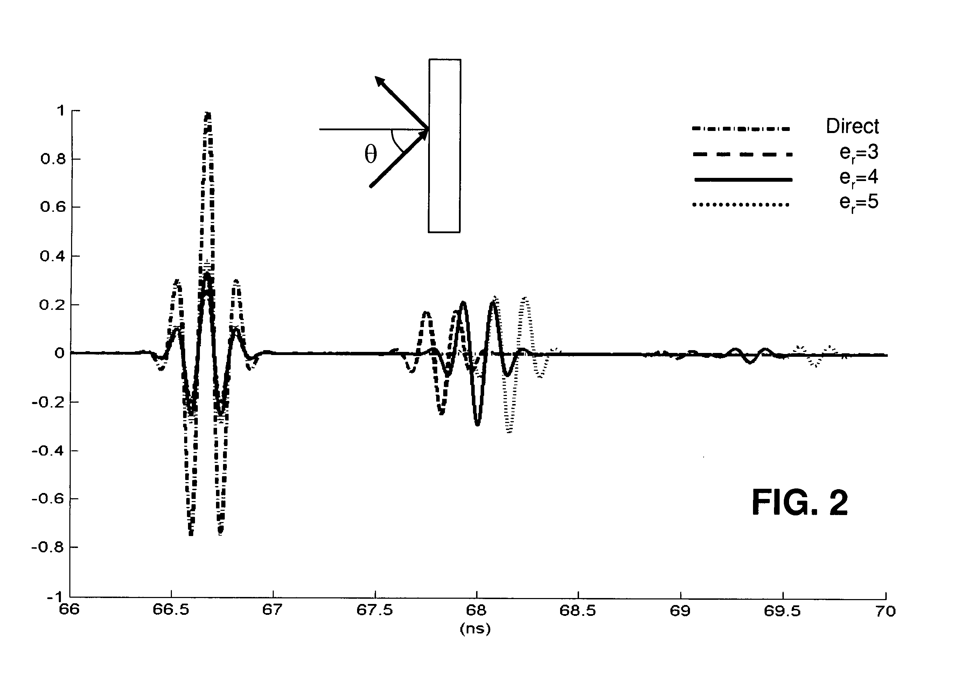

A la figure 2, un émetteur envoie la même impulsion qu'à la figure 1, et le récepteur reçoit l'impulsion après réflexion sur un mur, sous une incidence θ. Le mur a une conductivité de 0,0012 ohm⁻¹.m⁻¹ et une épaisseur de 10 cm. Plusieurs formes d'onde ont été superposées sur la figure 2 et elles correspondent à différentes valeurs de permittivité εᵣ du matériau composant le mur. On a représenté fictivement la forme d'onde qui correspondrait à un trajet direct sans obstacle, de même longueur que le trajet réfléchi, les antennes d'émission et de réception étant orientées de manière à émettre et recevoir les ondes sous les mêmes incidences que dans le cas des trajets réfléchis. Les formes d'onde réfléchies qui sont représentées, correspondent respectivement à des matériaux de permittivité réelle relative de 3, 4 et 5 respectivement, pour un angle θ=0°. Le retard augmente avec la permittivité.

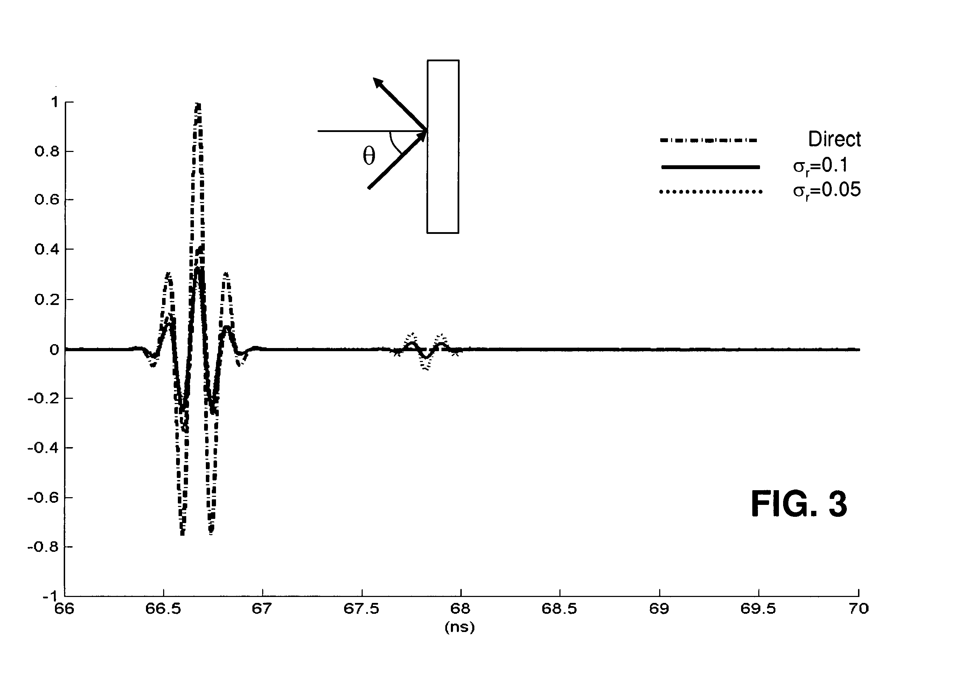

En figure 3, on est toujours dans le cas d'une réflexion sur un mur sous une incidence θ (dans le cas bidimensionnel), et deux formes d'onde sont représentées (en plus du trajet direct fictif décrit ci-dessus), correspondant à deux conductivités électriques différentes du matériau constituant le mur, dans le cas où l'épaisseur du mur est de 10 centimètres, la permittivité réelle relative est de 3 et les conductivités respectives sont de 0,1 et 0,05 ohm⁻¹.m⁻¹, l'angle θ=0° dans le plan bidimensionnel.

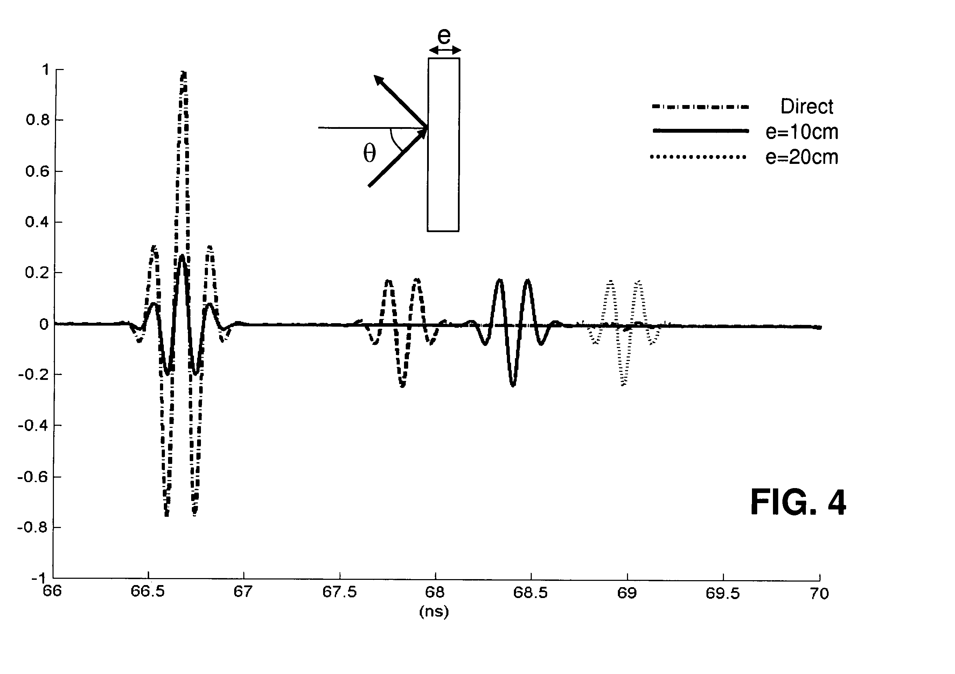

A la figure 4, l'onde réfléchie par le mur sous une incidence θ (dans le cas bidimensionnel) est plus ou moins déformée et retardée en fonction de l'épaisseur e du mur et on a représenté deux formes d'onde (en plus de l'onde correspondant au trajet direct fictif) correspondant respectivement à une épaisseur de 10 centimètres et une épaisseur de 20 centimètres, pour un angle θ=0° dans le plan bidimensionnel. La conductivité électrique est de 0,0012 ohm⁻¹m⁻¹ et la permittivité réelle relative est égale à 3

On peut également considérer le cas d'une onde électromagnétique qui subit une interaction de diffraction sur l'arête aiguë d'un obstacle. Le signal est rétrodiffusé dans toutes les directions de l'espace mais avec quand même des directions de propagation privilégiées (en particulier le long de deux frontières optiques délimitées par les rayons réfléchis et incidents), et avec une distorsion significative. Dans les autres directions, on peut considérer que l'atténuation est trop forte pour donner lieu à un signal directement exploitable. Là encore, la forme d'onde est modifiée par l'interaction de l'onde avec l'arête.

Dans les figures précédentes 1 à 4, on n'a pas pris en compte la déformation de signal due aux antennes elles-mêmes : antenne d'émission et antenne de réception. On s'est contenté de comparer une forme d'onde déformée par un mur en transmission ou en réflexion, en la comparant à la forme d'onde en l'absence de mur mais avec le même angle d'émission (relativement à l'antenne d'émission) et le même angle de réflexion (relativement à l'antenne de réception), et ce pour des antennes idéalement non déformantes.

Cependant, de manière générale, la déformation due à la direction selon laquelle on considère l'émission et à la direction selon laquelle on considère la réception est très importante en raison de la non-uniformité des diagrammes de rayonnement des antennes, même lorsqu'elles sont considérées comme quasi-omnidirectionnelles en puissance. A titre d'exemple on peut citer l'antenne CMA (pour *Conical Monocone Antenna* en langue anglaise).

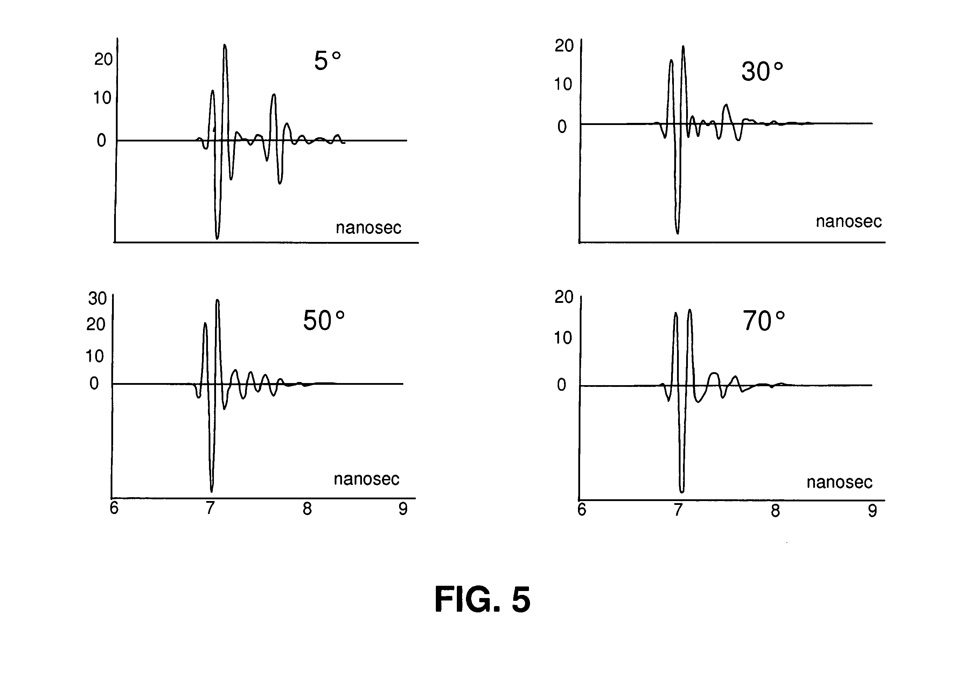

La figure 5 illustre, à titre d'exemple seulement, des formes d'onde reçues sous divers angles d'incidence par un même modèle d'antenne et pour une même impulsion émise. Les angles sont respectivement de 5°, 30°, 50° et 70° dans le plan en azimut, par rapport à un axe caractéristique de l'antenne ; l'axe caractéristique peut être un axe de symétrie si l'antenne est symétrique (antenne de forme papillon par exemple). Ces figures sont données pour montrer des déformations possibles en fonction de la direction de rayonnement et de réception d'une antenne UWB, mais ces déformations dépendent du type d'antenne. Dans un réseau de communication multi-noeuds conçu pour de la communication d'informations mais non pour la caractérisation de l'environnement, il faudra tenir compte des caractéristiques des antennes telles qu'elles sont, c'est-à-dire non optimisées pour la caractérisation d'environnement.

Toutes les formes d'onde qui sont représentées sur les figures ne sont que des exemples simples montrant qu'on peut observer des déformations différentes lorsqu'il y a une interaction différente entre l'onde et un obstacle.

Selon l'invention on associera des formes d'onde à différentes interactions possibles de manière à pouvoir ensuite détecter l'une de ces formes, ou une forme suffisamment ressemblante, dans un signal reçu et en conclure qu'il est probable que l'onde impulsionnelle a subi telle ou telle interaction associée à cette forme.

Etant donné que la déformation est particulièrement sensible en fonction de la direction d'émission et de la direction de réception, on associera des formes d'onde à plusieurs directions possibles pour une même catégorie d'interactions. Comme la déformation dépend aussi d'autres paramètres, tels que l'épaisseur, la conductivité, la permittivité, une stratégie possible consiste à mémoriser des formes d'onde correspondant chacune à une interaction qui peut être définie pour un matériau de paroi (brique, béton, bois, verre, etc.) plutôt que pour une combinaison d'une permittivité et une conductivité. En complément de ces informations, l'algorithme dispose des descripteurs de distributions de probabilité relatives aux caractéristiques géométriques. Selon un compromis entre complexité de calcul temps-réel et mémoire allouée, on peut stocker un plus ou moins grand nombre de formes prédites dans une mémoire associée au récepteur. La prédiction des formes d'onde non mémorisées est assurée par un organe de prédiction à la volée.

Ainsi, l'invention repose sur la capacité de prédire des formes d'onde reçues en s'appuyant sur les descripteurs contenus dans une mémoire associée à un récepteur de signaux radio UWB. Dans une réalisation simple de l'algorithme, ces descripteurs peuvent se matérialiser dans une table associant diverses formes d'onde et des interactions prédéfinies qui donnent lieu à ces formes d'onde. La mémoire peut être contenue dans le récepteur lui-même, mais on comprendra qu'elle peut aussi être contenue dans un organe de calcul ou de traitement de signaux qui est associé au récepteur mais non contenu dans le récepteur. Dans ce cas, le récepteur peut mémoriser des formes d'onde reçues en attendant de transférer ces formes d'onde à un organe de calcul ou traitement.

Le récepteur peut être mobile pour pouvoir être déplacé dans son environnement en vue de l'exploration de l'environnement et il est alors souhaitable qu'il soit de petite taille. Il y a cependant des cas où le récepteur peut être fixe : par exemple dans le cas où il doit servir à détecter principalement des modifications de l'environnement (introduction d'individus, ouverture de portes ou de fenêtres, déplacement de cloisons ou d'obstacles, etc.).

Si on place un récepteur dans un environnement intérieur réel (un bureau, une chambre d'appartement, etc.) et si on émet une impulsion à partir d'un émetteur placé dans cet environnement, le récepteur recevra un signal composite mélangeant des formes d'onde issues de plusieurs trajets simultanés de l'onde.

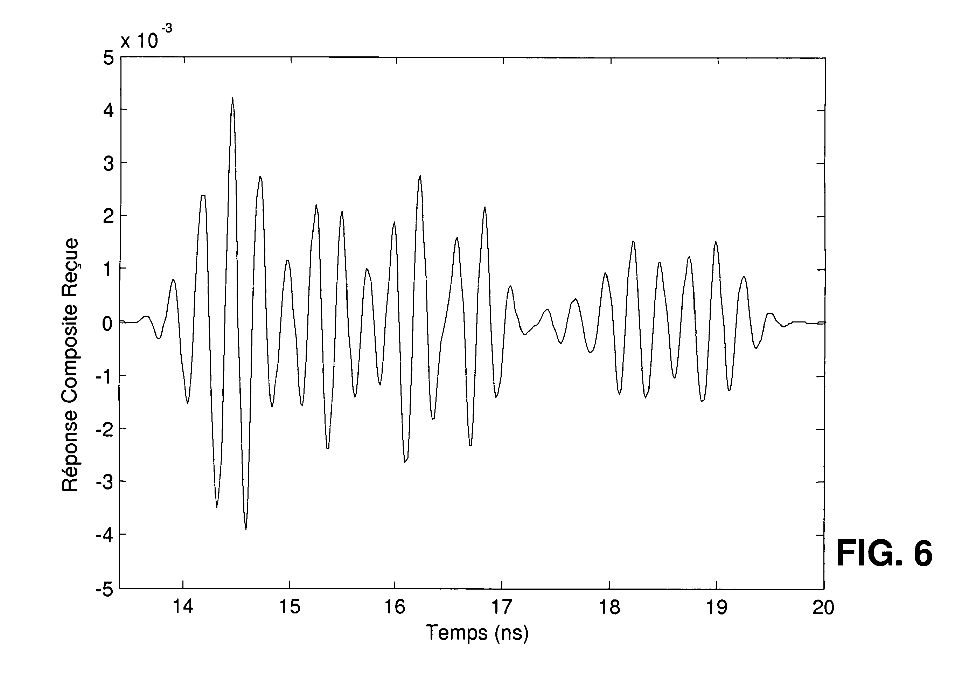

La figure 6 représente à titre d'exemple un signal composite reçu sur une antenne de réception, signal qui résulte de ce mélange d'ondes électromagnétiques reçues par le récepteur après l'émission d'une seule impulsion ; dans cet exemple, le signal reçu provient d'un trajet direct en provenance de l'émetteur mais aussi de plusieurs trajets réfléchis respectivement par le sol, par le plafond et par un mur de la pièce dans laquelle se situe le récepteur.

Le signal reçu en pratique par un récepteur est donc plus complexe que ceux qu'on a décrits en référence aux figures 1 à 5. Cependant, on considère qu'on peut retrouver dans ce signal composite plusieurs composantes correspondant chacune à un des trajets possibles de l'onde.

En effet, si on regarde le signal de la figure 6, on voit des pics d'amplitude qui permettent d'individualiser l'existence de chacun des trajets. Ces pics sont à des positions différentes les unes des autres dès lors qu'ils correspondent à des longueurs de trajets différentes parcourues par l'onde électromagnétique.

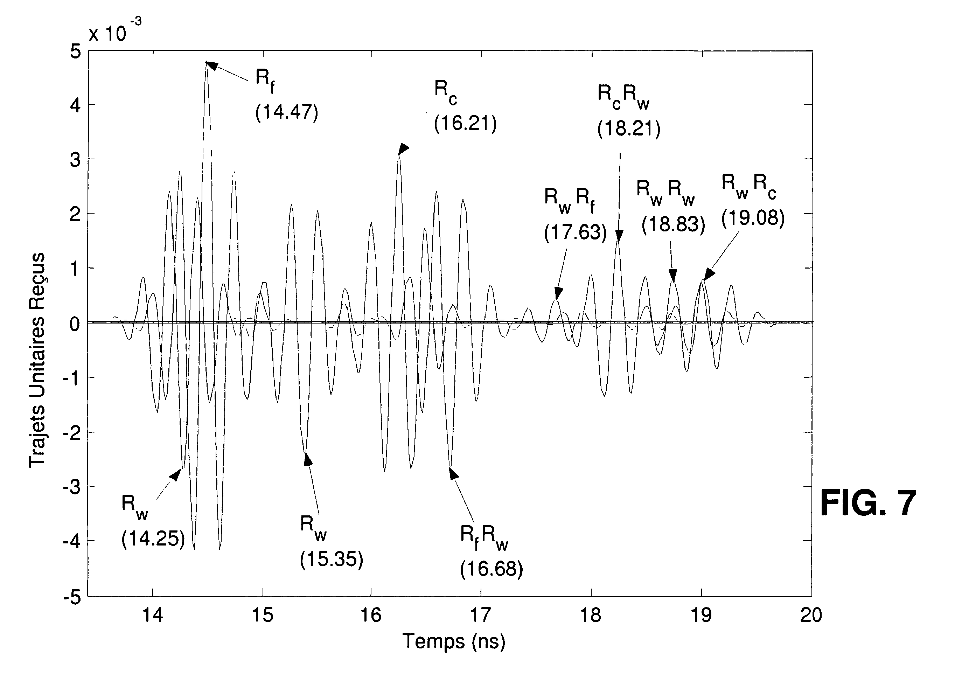

En réalité, le signal composite de la figure 6 n'est pas autre chose qu'une superposition de plusieurs impulsions (chacune en forme d'une sinusoïde multipliée par une gaussienne déformée par l'interaction correspondante) correspondant à différents trajets et on a illustré cela à la figure 7 en représentant différents signaux individualisés qui correspondent à des trajets possibles de l'onde impulsionnelle émise. On a supposé qu'il n'y avait pas de trajet direct sur la portion représentée mais seulement :
- un trajet réfléchi sur un mur (signal Rw)
- un trajet réfléchi sur le sol (signal Rf),
- un trajet réfléchi sur un autre mur (signal Rw)
- un trajet réfléchi sur le plafond (signal Rc),
- nombreux trajets issus de réflexions doubles.

C'est la combinaison de ces différents signaux qui produit le signal composite que le récepteur va observer et traiter.

Selon l'invention, on va chercher à reconnaître dans le signal composite fourni par le récepteur une ou plusieurs des formes caractéristiques d'interactions préenregistrées dans la mémoire ou prédites à la volée au moyen d'autres descripteurs contenus dans la mémoire. Une comparaison du descripteur de la forme d'onde reçue et des descripteurs des formes d'onde prédites est donc effectuée. Cette comparaison peut être mise en oeuvre par une recherche de valeurs d'inter-corrélation maximales entre une portion du signal reçu numérisé et des formes d'ondes numériques prédites dans le domaine temporel. Dans cette stratégie, une valeur de corrélation particulièrement élevée pour une forme prédite particulière, c'est-à-dire une ressemblance forte entre le signal reçu et cette forme particulière, sera le signe de la présence probable d'une interaction connue (au sens large, c'est-à-dire comprenant les directions d'émission et de réception) et correspondant à cette forme particulière. D'autres moyens de comparaison peuvent être employés, comme par exemple des outils d'estimation non linéaires tels que des réseaux de neurones. D'une manière plus générale, on peut envisager des comparaisons entre les descripteurs de formes d'onde prédites et des descripteurs du signal reçu, calculés à la réception.

Pour effectuer cette recherche, on commence par identifier des portions temporelles ou "fenêtres" dans lesquelles la distribution d'énergie du signal semble permettre d'isoler une impulsion. Les pics d'énergie seront en général faciles à identifier et permettront de définir des portions temporelles limitées autour de l'instant d'arrivée de ce pic, avec une probabilité forte que ces portions correspondent à l'arrivée d'une impulsion.

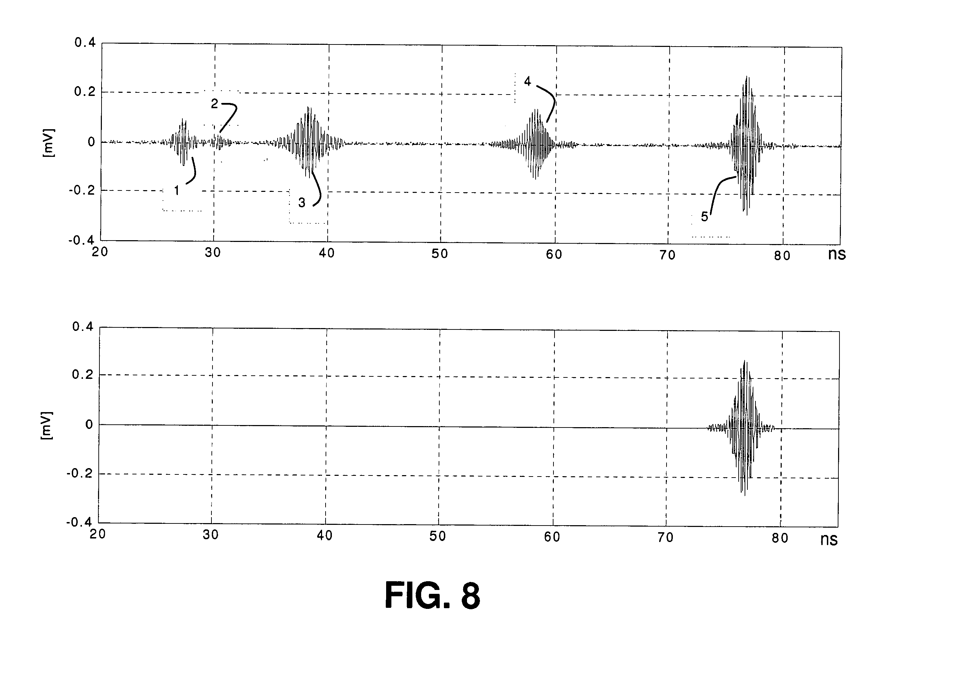

A la figure 8, on a représenté (partie supérieure de la figure) un signal (amplitude en millivolts en ordonnée, temps en nanosecondes en abscisse) obtenu dans une configuration de test, dans lequel les portions temporelles significatives du signal sont bien isolées les unes des autres et sont numérotées de 1 à 5, ce qui permet de mieux comprendre le processus. En fait, cette configuration particulière n'impacte pas le caractère général du procédé : des résultats de simulation démontrent que, même dans un cas moins favorable, c'est-à-dire en présence de trajets moins isolés, dans le cadre de la stratégie utilisant la corrélation comme outil de comparaison, on arriverait quand même à identifier des pics de corrélation, et par conséquent une estimation peut avoir lieu dans tous les cas. Dans la description qui suit à titre d'exemple, on considérera l'utilisation de l'inter-corrélation en tant qu'outil de comparaison et l'utilisation de formes d'onde numérisées dans le domaine temporel en tant que descripteurs de forme d'onde.

On travaillera de préférence en commençant par les zones de signal présentant les plus hauts niveaux d'énergie car elles sont porteuses de plus d'information, ou en tous cas l'information qu'elles contiennent est plus facile à déterminer.

Ainsi, si on isole une portion temporelle référencée 5 située entre 72 et 80 nanosecondes et ayant le plus haut niveau de signal, on effectue une corrélation entre la forme d'onde située dans cet intervalle et une série de formes d'onde contenues en mémoire (normalisées en énergie dans cet exemple afin de faire porter la comparaison uniquement sur l'allure temporelle des signaux et non pas sur leurs niveaux).

On calcule la valeur maximale d'inter-corrélation pour chacune des formes d'onde prédites et on choisit un ensemble de formes d'ondes correspondant aux valeurs les plus élevées parmi les maxima d'inter-corrélation. Par conséquent, on associe au trajet de propagation d'onde en cours d'analyse de corrélation un ensemble de variables angulaires possibles. On reviendra plus loin sur le calcul de corrélation avec des illustrations à l'appui des explications.

On peut refaire la même opération sur plusieurs fenêtres temporelles correspondant aux différentes impulsions identifiables 4 à 1.

On peut également profiter de la reconnaissance faite pour une première impulsion pour éliminer cette impulsion du signal reçu avant de refaire une analyse sur une autre impulsion. C'est particulièrement utile si les impulsions tendent à se chevaucher. Dans ce cas, avec la forme préenregistrée reconnue dans la première impulsion 5; on construit un signal fictif qui correspond à cette forme et qui est calé en temps et en niveau d'amplitude sur la partie de signal référencée 5 qui a donné lieu à cette recherche de maximum d'inter-corrélation ; ce signal fictif est représenté dans la partie inférieure de la figure 8. Puis on soustrait le signal fictif du signal reçu, et on procède de façon similaire pour chaque configuration (c'est-à-dire pour chaque groupe ou quartet de quatre variables angulaires) en parallèle. L'opération revient à construire un arbre d'estimation pour les variables angulaires, dont chaque branche correspond à une configuration retenue. Ensuite, on recommence une recherche de maximum entre les maxima d'inter-corrélation sur d'autres portions temporelles, de préférence dans l'ordre décroissant des niveaux de signal ; on trouve une nouvelle forme d'onde présentant la valeur la plus élevée d'inter-corrélation avec cette portion, on la reconstruit et on la soustrait du signal ; ainsi de suite par itérations successives jusqu'à avoir identifié plusieurs interactions probables. A chaque itération (c'est-à-dire pour chaque trajet d'onde traité), l'arbre d'estimation croît en profondeur, jusqu'à atteindre une profondeur maximale égale au nombre de fenêtres temporelles considérées, ou, de manière équivalente, au nombre de trajets dits "résolus", c'est-à-dire identifiés à la suite de l'analyse.

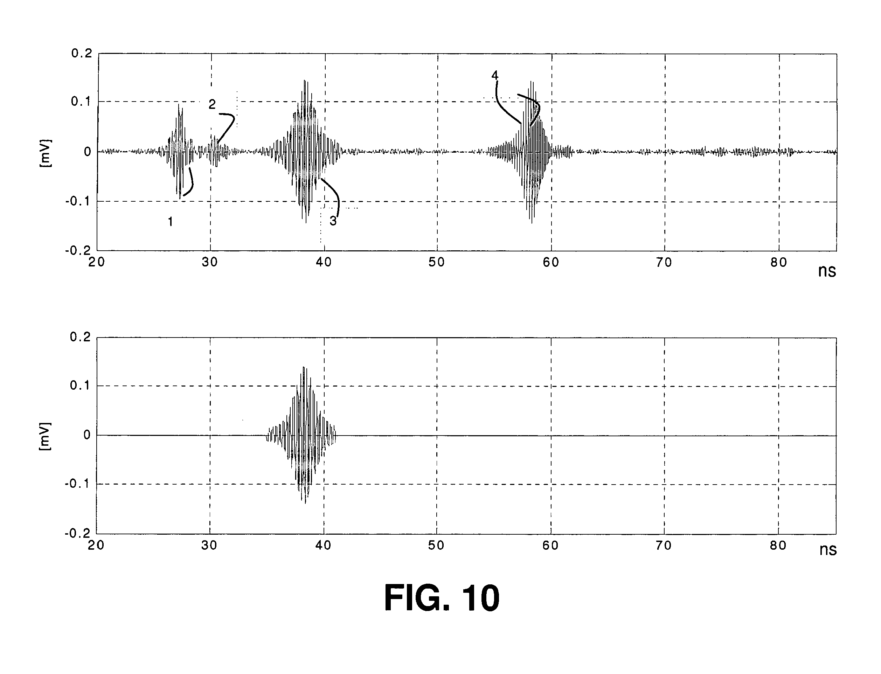

La figure 10 représente à sa partie supérieure le signal ayant fait l'objet de la première soustraction (échelle dilatée par rapport à la figure 8) et à sa partie inférieure le signal fictif reconstruit après avoir trouvé une corrélation maximale entre la portion temporelle de signal référencée 3 et les formes d'onde stockées en mémoire.

La recherche de corrélation se fera en principe sur des signaux numérisés, aussi bien en ce qui concerne le signal reçu par le récepteur que les formes d'onde prédites stockées. Cependant, le stockage des formes d'onde prédites n'est pas forcément fait en stockant une succession numérique de valeurs d'amplitude échantillonnées à un intervalle de temps déterminé. On peut très bien envisager d'autres solutions de stockage, et en particulier un stockage d'une représentation de la forme d'onde dans l'espace des fréquences. Dans ce cas une transformée de Fourier de la forme d'onde reçue peut être faite après identification d'une portion temporelle intéressante. Une comparaison des formes d'onde peut être faite alors dans l'espace des fréquences (par exemple, au sens des moindres carrés). Un signal temporel est ensuite reconstitué en vue d'une soustraction entre le signal reçu et un signal reconstruit.

Du fait que le stockage de formes d'onde prédites peut se faire sous différentes formes, on a utilisé dans cette demande de brevet l'expression "descripteur de forme d'onde" pour les données mises en mémoire pour chaque interaction prédite, ce terme recouvrant aussi bien
- une description directe de la forme d'onde par un ensemble de valeurs numériques d'échantillons successifs sur une période de temps donnée,
- ou une description indirecte, sous forme d'un ensemble de valeurs complexes (par exemple comprenant le module et la phase) pour une succession de fréquences dans une bande de fréquences déterminée,
- ou toute autre description directe ou indirecte de la forme d'onde, une série de paramètres descriptifs pouvant être enregistrés pour décrire une forme d'onde.

La recherche de corrélation maximale se fait en calculant des valeurs d'inter-corrélation entre le signal reçu et les formes d'onde prédites. Par exemple, si la recherche de corrélation se fait dans le domaine temporel, on procède comme suit :
- on effectue le calcul d'une version numérique de la fonction d'inter-corrélation Cᵢ(τ) = ∫ₜ Spᵢ(t)Sr(t-τ)dt à partir des versions numérisées du signal reçu fenêtre Sr(t) (portion correspondant au trajet courant isolé à estimer) et d'une forme d'onde prédite Spᵢ(t) parmi les différentes formes prédites correspondant chacune (par exemple) à un type d'interaction et un couple de directions d'émission/réception AEᵢ/ARᵢ ; t est la variable temps est une valeur de glissement temporel, et la valeur d'inter-corrélation Cᵢ(τ) pour un glissement donné τ est l'intégrale temporelle, sur la variable temps t, des produits de tous les échantillons Spᵢ(t) d'une forme d'onde prédite par un échantillon correspondant Sr(t-τ), décalé du glissement τ, du signal reçu Sr(t) ; la valeur d'inter-corrélation est calculée pour un ensemble de valeurs de glissement τ ;
- on prélève la valeur maximale Cᵢ(τₓᵢ) de cette fonction d'inter-corrélation, ainsi que le décalage temporel τₓᵢ qui a donné lieu à cette même valeur ;
- on reproduit l'opération sur l'ensemble ou sur un sous-ensemble des k formes d'onde qu'il est possible de prédire ;
- on recherche ensuite avantageusement la valeur maximale Cₘ(τₓₘ) parmi les maxima d'inter-corrélations C₁(τₓ₁), ..., Ck(τₓₖ) associés à chaque forme d'onde prédite Sp₁(t), ...., Spₖ(t), ou encore un jeu de N valeurs d'inter-corrélation (par exemple, les N plus fortes valeurs) ;
- on associe au trajet courant estimé au moins la forme d'onde Spₘ(t) qui a donné lieu au maximum Cₘ(τₓₘ), ou un jeu de N formes d'onde, parmi les k formes d'onde possibles ;
- à partir des informations Cₘ(τₓₘ) et τₓₘ et de la forme d'onde sélectionnée (ou des informations correspondantes pour le jeu de N formes d'onde), on reconstruit de préférence une réplique numérisée (ou N répliques numérisées) du signal reçu, fenêtré, cette réplique étant correctement positionnée en temps et dimensionnée en amplitude ;
- on soustrait la réplique à la version numérisée du signal reçu (dans son intégralité), et l'on reproduit l'ensemble des opérations précédentes pour l'estimation des trajets suivants à partir du signal reçu ainsi nettoyé. A partir du jeu de N répliques, on estimera les trajets suivants à partir de N versions du signal reçu nettoyé, chacune constituant une branche de l'arbre d'estimation.

Dans une réalisation simple de l'algorithme, dans laquelle on fixe N=1, la forme d'onde qui a donné lieu au maximum sélectionné est associée à une interaction subie par l'onde impulsionnelle et à un couple de valeurs angulaires d'émission/réception. Dans le cas d'une réflexion simple, cela donne la position relative et l'orientation d'une paroi réfléchissante par rapport aux positions d'émetteur et de récepteur. La position du point réflecteur se trouve à l'intersection d'une droite passant par l'antenne d'émission et dirigée selon la direction d'émission correspondant au descripteur sélectionné et d'une droite passant par l'antenne de réception et dirigée selon la direction de réception correspondant au descripteur sélectionné ; l'orientation de la paroi est celle d'un plan perpendiculaire à la bissectrice de ces deux droites.

Etant donné que le procédé inclut normalement la détermination d'une portion temporelle dans laquelle se situe chaque trajet reçu, on peut déterminer, à partir de la valeur de retard estimé pour le premier trajet reçu et des estimations des retards des trajets suivants, une indication supplémentaire permettant, par exemple, d'affiner l'estimation des positions de paroi qui ont été déterminées aux intersections des droites d'émission et réception. En effet, l'homme de l'art comprendra aisément qu'on peut déterminer, pour chaque trajet identifié, le temps de vol des signaux (TOF pour Time of Flight en langue anglaise) et donc la distance parcourue par ces mêmes signaux, à partir des retards estimés (TOA pour Time of Arrival en langue anglaise). Cette étape supplémentaire prévoit par exemple la mise en oeuvre d'un protocole adapté permettant l'estimation du temps de vol aller-retour des signaux (Round Trip Time of Flight en langue anglaise) à partir de l'échange coopératif de paquets entre les deux noeuds radio considérés (Two-way Ranging en langue anglaise).

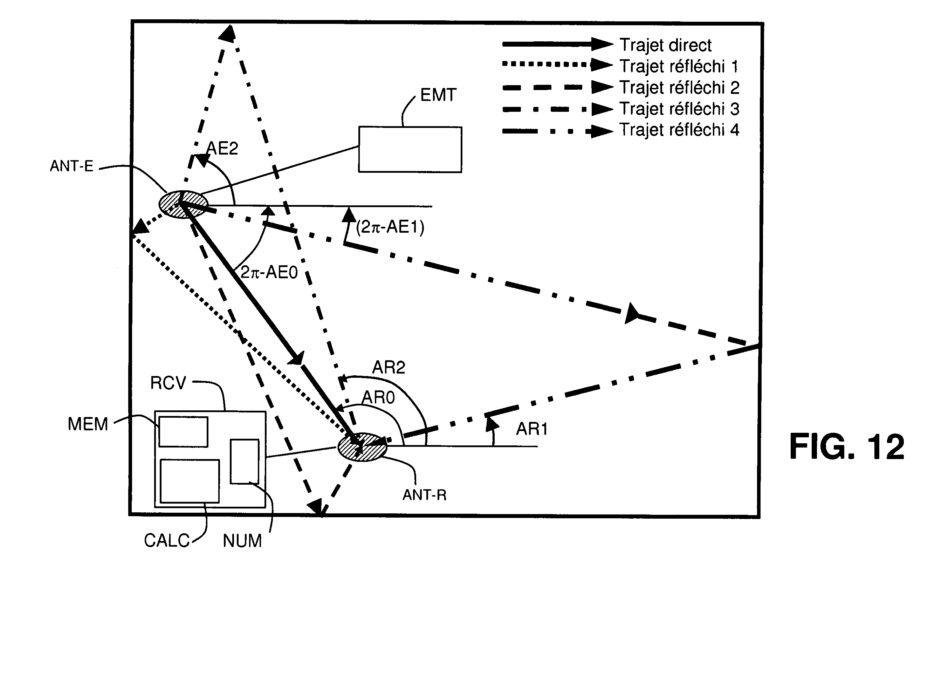

Les résultats suivants ont été obtenus pour la configuration géométrique de la figure 12 et pour une antenne de type cardioïde telle que décrite dans la publication de X. Liang et Y.Y.M. Chia "New decision wideband direction finding antenna", dans IEEE proceedings on Microwave Antennas Propagation, vol 148 N°6, décembre 2001, et un bruit additif gaussien filtré dans la bande du signal [2,8 - 6,2 GHz].

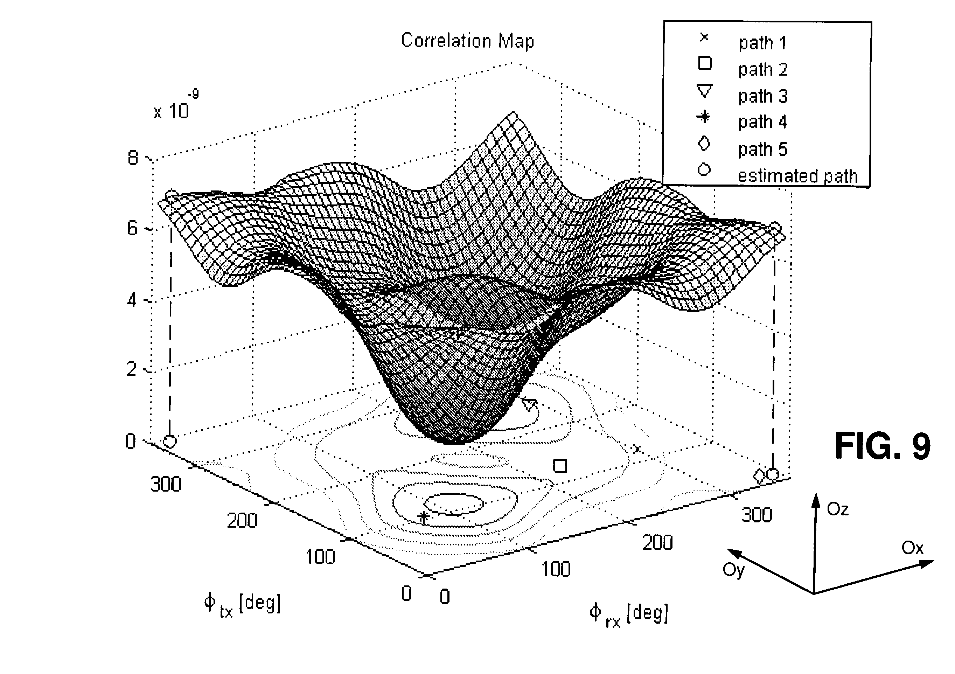

A titre d'illustration des résultats de calcul d'inter-corrélation, on a représenté sur la figure 9 un diagramme, en trois dimensions, des maxima d'inter-corrélation qui résultent des calculs d'inter-corrélation pour la portion temporelle 5 du signal reçu représenté à la figure 8. Ce diagramme est tiré de simulations et tests effectués et n'est donné qu'à titre d'exemple. L'inter-corrélation est calculée en fonction de deux paramètres qui sont un angle de réception Φrx (graduation en degrés selon un axe Ox) et un angle d'émission Φtx (graduation en degrés selon un axe Oy). Un niveau de corrélation est donné selon un troisième axe Oz, en unités arbitraires. Les maxima d'inter-corrélation sont calculés pour une série de combinaisons d'une valeur d'angle d'émission et d'une valeur d'angle de réception et sont reportés sur le diagramme.

La carte des maxima d'inter-corrélation (étiquetée "correlation map") de la figure 9 permet de déterminer des maxima de maxima d'inter-corrélation (au moins un maximum mais éventuellement plusieurs) entre le signal reçu, fenêtré (ici la fenêtre définit la portion temporelle 5 du signal), et les signaux de référence de la base de données, en fonction des angles d'émission et de réception. C'est une première itération, les itérations suivantes porteront sur d'autres fenêtres.

Dans le plan Ox, Oy du diagramme, on a reporté les points correspondants à cinq trajets réels possibles dans une configuration qui a servi au test et pour laquelle le signal reçu était celui de la figure 8. Les cinq trajets sont représentés par des marques respectives (étiquetées respectivement dans la légende par "path1", "path2", "path3", "path4", "path5") ; ces marques sont respectivement une croix, un carré, un triangle, une étoile, et un losange ; elles sont placées à des positions correspondant aux angles caractéristiques d'émission et de réception préalablement relevés dans la configuration de test pour divers trajets possibles des impulsions émises, avec ou sans réflexion. Par exemple, la première portion temporelle, qui correspond à une marque en croix, est une position à 100° en émission et 80° en réception) ; la deuxième correspond à une marque carrée, de position à 125° en émission et à 225° en réception, etc.

On a représenté aussi, suite aux calculs d'inter-corrélation, deux marques supplémentaires qui sont deux marques rondes (étiquetées "estimated path" dans la légende) qui ont été placées dans le plan Ox Oy là où sont les maxima (selon Oz) de la fonction des maxima d'inter-corrélation obtenue ; ces marques représentent donc des trajets estimés grâce à ce calcul d'inter-corrélation. On constate que ces deux marques rondes correspondent à des angles proches de 360° en émission et de zéro en réception ou le contraire. Il est donc probable qu'un trajet d'impulsion correspondant à ces angles existe dans la configuration de test. C'est justement ce que l'on peut constater car on voit que l'une des marques rondes est très proche d'une marque en losange.

Les calculs d'inter-corrélation effectués dans ce cas ont donc permis de vérifier que la portion temporelle 5 (objet de ce calcul) correspond bien à un des trajets possibles préalablement identifiés, à savoir le premier trajet "path1" qui correspond à un angle d'émission d'environ 0° et un angle de réception d'environ 360°. L'ambiguïté constatée (il y a en effet deux marques rondes dans le diagramme) est due au principe de réciprocité des trajets électromagnétiques. Cette ambiguïté peut la plupart du temps être aisément levée a posteriori, par exemple sur la base de simples considérations géométriques (par exemple l'un des deux couples donne lieu à une configuration impossible pour une réflexion simple compte tenu de la référence angulaire des antennes.

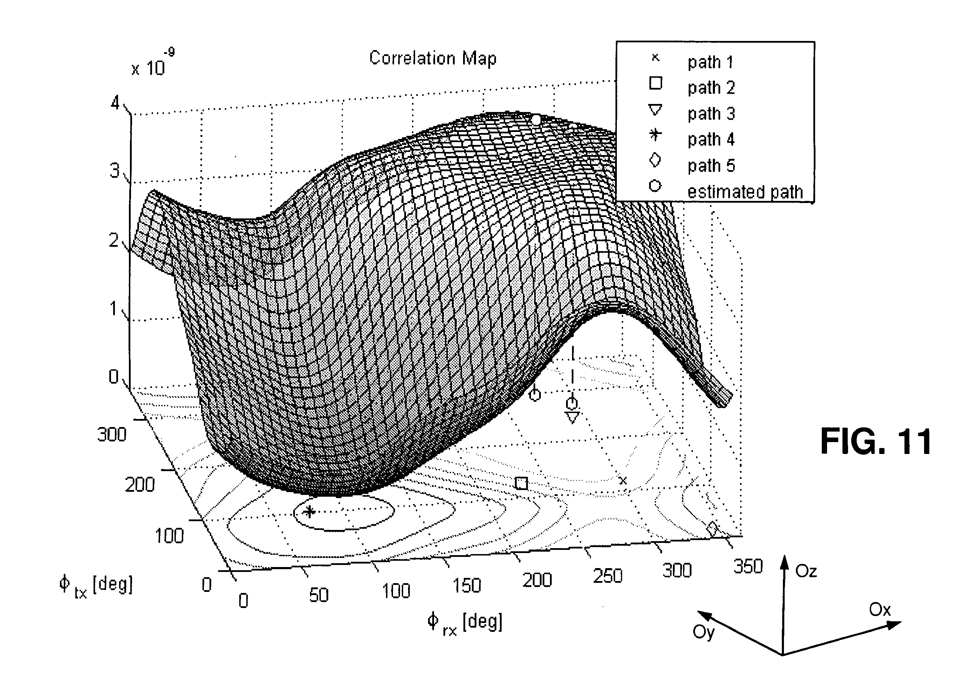

Si on effectue comme expliqué précédemment une soustraction de la première forme d'onde identifiée comme étant la plus ressemblante avec la portion temporelle 5, on aboutit à une nouvelle forme d'onde de signal global reçu représentée en haut de la figure 10 ; une deuxième étape d'itération consiste alors à sélectionner une nouvelle portion temporelle utile, ici la portion 3 et à refaire des calculs d'inter-corrélation. La figure 11 représente une nouvelle carte de corrélation obtenue. Les trajets identifiés au préalable dans le test sont bien sûr aux mêmes positions dans le diagramme, mais on constate que les maxima d'inter-corrélation obtenus cette fois (marques rondes dans le plan Ox, Oy du diagramme) sont maintenant à un couple d'angles 240°, 290°, ce qui définit un trajet différent du précédent. On constate que l'une des marques rondes est très proche d'une marque triangulaire, correspondant à l'étiquette "path3". Le calcul d'inter-corrélation pour la portion temporelle 3 amène donc, là encore, à la conclusion que cette impulsion a bien suivi l'un des trajets préalablement identifiés dans le test, à savoir le troisième trajet "path3".

La numérisation de formes d'ondes de signal reçu est de préférence effectuée pour une série d'impulsions successivement émises par l'antenne d'émission à intervalles de temps déterminés. On peut alors recueillir des formes d'ondes pour chacune des impulsions émises et réaliser une intégration cohérente des signaux en additionnant les signaux avec un décalage temporel approprié afin d'augmenter le rapport signal à bruit disponible pour l'analyse de chaque trajet. Si les impulsions sont toutes identiques, c'est-à-dire si l'on considère que le canal est stationnaire et que la dérive relative des horloges entre l'émetteur et le récepteur est faible (ou compensée par un dispositif physique et/ou par un traitement approprié) durant le processus d'intégration cohérente, on augmente le rapport signal à bruit et on facilite donc la détermination d'une forme d'onde peu bruitée qui servira dans les opérations de corrélation.

Puisque le noeud émetteur et le noeud récepteur font partie d'un réseau de communication UWB, la série d'impulsions est de préférence une série émise pendant un message de communication envoyé sur le réseau par l'antenne d'émission, par exemple pendant l'en-tête d'un message, de manière à effectuer une caractérisation d'environnement pendant l'utilisation courante du réseau de communication. Une telle caractérisation pendant la communication peut s'avérer particulièrement utile pour plusieurs applications. Une première application consiste, par exemple, à utiliser la caractérisation d'environnement afin d'adapter le récepteur (ou l'émetteur) en fonction des variations d'environnement. L'adaptation se fera en principe en agissant sur les filtres qui sont contenus dans le récepteur et qui sont placés entre l'antenne de réception et une sortie du récepteur. Mais au lieu d'optimiser uniquement la liaison radio composée d'une paire de dispositifs UWB, on peut aussi envisager une stratégie d'optimisation au niveau réseau, par exemple en mettant en oeuvre un routage approprié de l'information en multi-sauts en évitant de passer par des liaisons pénalisées par des interactions identifiées comme trop défavorables.

La fonctionnalité de caractérisation d'environnement au sein d'un réseau de communication UWB peut être également exploitée dans n'importe quel cas où la caractérisation d'environnement permet d'enrichir l'information échangée entre les noeuds du réseau, de façon à fournir un service supplémentaire ou complémentaire à la fonction de communication, et/ou à améliorer la qualité de la communication d'un réseau.

Par exemple, un réseau sans fil UWB de capteurs de température peut déclencher une action (telle que la mise en route du chauffage) en fonction de la température ambiante (mesurée en certains noeuds du réseau) mais aussi en fonction du volume de l'environnement estimé par la fonction de caractérisation d'environnement.

Dans tous les cas, les données mesurées par le réseau de capteurs et échangées entre les noeuds sont enrichies par les informations sur l'environnement.

Dans le processus de recherche d'inter-corrélation maximale permettant d'aboutir à la sélection d'une interaction déterminée, on comprendra qu'on peut introduire différentes actions permettant de réduire les temps de calcul. En particulier, il est souhaitable d'éliminer les calculs de corrélation qui aboutissent à des solutions qui n'ont pas de sens compte-tenu de ce qu'on sait déjà sur l'environnement. Par exemple, si on a déjà estimé au moins un trajet dans l'ensemble des estimations retenues pour le trajet courant, on peut éliminer des configurations donnant lieu à une probabilité nulle (c'est-à-dire des configurations impossibles).

Une autre méthode possible pour limiter les calculs d'inter-corrélation consiste à ajuster le nombre N d'estimations retenues selon le niveau relatif d'inter-corrélation. Par exemple, on prendra N petit lorsque peu de configurations sont caractérisées par des valeurs d'inter-corrélation très élevées par rapport aux configurations restantes (c'est-à-dire des écarts relatifs élevés). Au contraire, on considérera un nombre important N de candidats à l'estimation lorsque les écarts relatifs des valeurs d'inter-corrélation sont petits.

Le système d'aide à la caractérisation d'environnement selon l'invention est représenté à la figure 12 dans un exemple de contexte. Seuls deux noeuds du réseau de communication UWB sont représentés pour ne pas alourdir la représentation et, pour ces deux noeuds qui comportent en principe chacun à la fois un émetteur et un récepteur, on a représenté seulement un émetteur pour l'un des noeuds et seulement un récepteur pour l'autre noeud.

Un émetteur EMT à bande ultra large et un récepteur RCV à bande ultra large sont placés dans une pièce rectangulaire dont les parois sont réfléchissantes pour les ondes électromagnétiques émises. Il s'agit d'une configuration géométrique de test. Seuls les quatre murs de la pièce et les trajets significatifs présents dans le plan horizontal de la liaison radio sont matérialisés. Sans perte de généralité, on choisit ici une même orientation pour les deux antennes (et donc une même référence angulaire pour la définition des directions d'émission et de réception). L'émetteur comprend une antenne d'émission ANT-E placée à une première position dans la pièce. Le récepteur comprend une antenne de réception ANT-R placée à une deuxième position dans la pièce. Les antennes ont été représentées symboliquement par une ellipse dont l'axe longitudinal représente un axe caractéristique de l'antenne.

Une impulsion de signal électromagnétique émise par l'émetteur peut atteindre le récepteur de différentes manières possibles. On a représenté uniquement un trajet direct et des réflexions simples. On n'a pas représenté les réflexions multiples possibles, ni des réflexions (même simples) sur le sol ou sur le plafond de la pièce.

On voit sur la figure 12 un trajet direct en trait plein gras, selon la ligne qui réunit les centres des antennes, cette ligne ayant une orientation à un angle AE0 par rapport à l'axe caractéristique de l'antenne d'émission (l'angle est représenté par commodité sous forme de son complément à 2π en raison du fait qu'il est supérieur à π dans cet exemple), et une orientation à un angle AR0 par rapport à l'axe caractéristique de l'antenne de réception.

On voit encore un premier trajet avec réflexion sur le mur de droite, avec des angles respectifs AE1 pour l'émission (représenté là encore par son complément 2π - AE1) et AR1 et la réception. Puis un trajet avec réflexion sur le mur du haut de la figure avec des angles respectifs AE2 et AR2. Les antennes n'étant pas forcément symétriques par rapport à leur axe radioélectrique caractéristique, les angles sont orientés (avec la convention suivante : les angles sont positifs dans le sens de rotation inverse des aiguilles d'une montre).

Le récepteur reçoit des signaux analogiques de l'antenne ANT-R. Ces signaux analogiques sont préamplifiés, filtrés, puis numérisés par un premier circuit de traitement analogique faisant partie du récepteur, ce premier circuit étant désigné par la référence NUM.

Les signaux numérisés sont traités par un processeur de calcul CALC qui comprend notamment des moyens et programmes de calcul nécessaires pour effectuer des recherches d'inter-corrélation maximale. Des formes d'onde élémentaires prédites sont stockées dans une mémoire MEM. A partir de ces formes d'onde élémentaires et d'a *priori* déterministes, d'autres formes d'onde complexes peuvent aussi être calculées à la volée. Ce sont ces formes d'onde prédites (élémentaires et/ou complexes) qui feront l'objet de l'inter-corrélation avec le signal reçu numérisé, dans au moins une portion temporelle.

Le calculateur CALC comprend
- des programmes de calcul pour déterminer une ou plusieurs portions temporelles de la forme d'onde de signal numérisé qui, en raison de leur distribution temporelle d'énergie, sont susceptibles de contenir une des formes d'onde prédites,
- des programmes de calcul pour comparer le signal reçu numérisé dans au moins une de ces portions temporelles avec plusieurs des formes d'onde prédites dont les descripteurs sont dans la mémoire MEM ou calculés à la volée ; ces programmes sont de préférence des programmes de recherche de corrélation temporelle maximale pour chaque forme d'onde prédite, ils déterminent quel est le glissement temporel d'une forme d'onde prédite sur une forme d'onde reçue qui donne la valeur de corrélation la plus élevée en valeur absolue et quelle est cette valeur,
- un programme pour sélectionner au moins un descripteur pour lequel la comparaison indique une ressemblance entre la forme prédite et la portion temporelle de forme reçue ; pour un exemple simple de réalisation, ce programme détermine au moins le maximum des maxima d'inter-corrélation,
- et des moyens pour stocker, dans la mémoire MEM ou dans une autre mémoire, une information sur le descripteur ainsi sélectionné.

Les circuits électroniques de calcul (CALC, MEM notamment) ne sont pas nécessairement localisés dans le récepteur du noeud de communication comprenant l'antenne de réception. Ils peuvent très bien être ailleurs, par exemple au niveau d'un autre noeud, ou d'une station centrale.

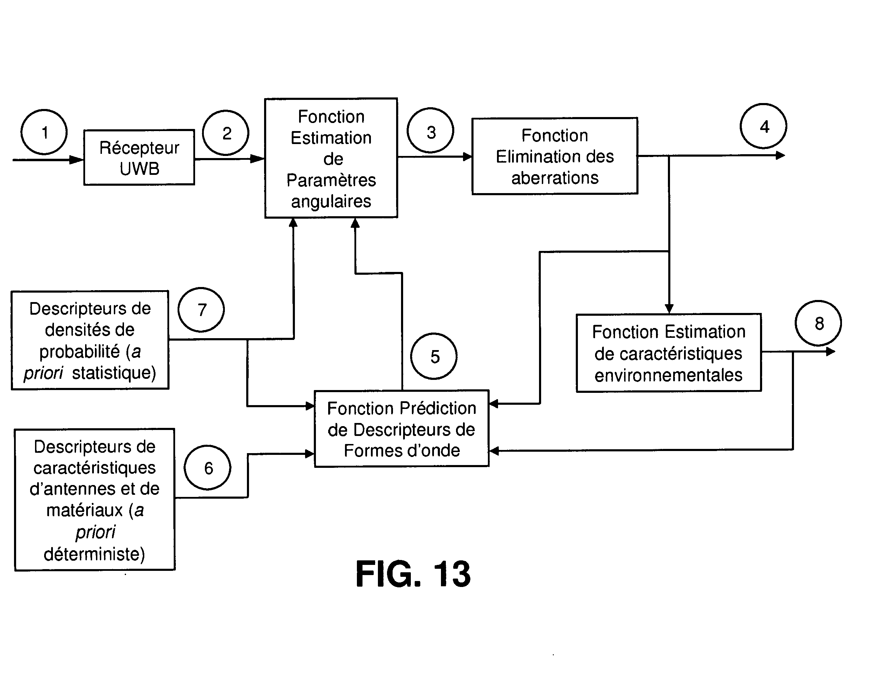

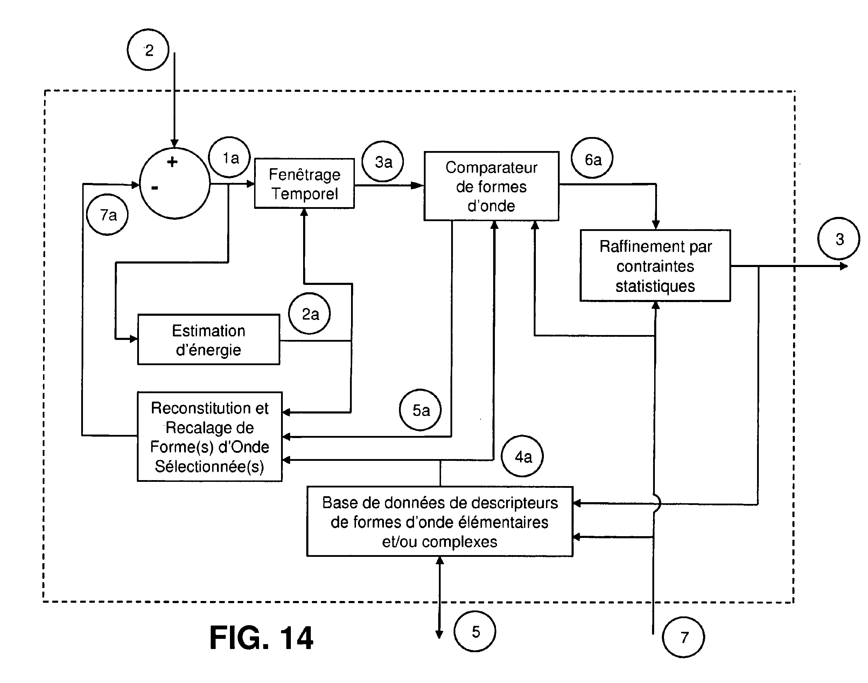

Pour résumer les principes de la présente invention, on a représenté schématiquement ces principes sur les figures 13 et 14.

Sur la figure 13, le principe général est exposé. Le signal radiofréquence 1 est reçu par un récepteur UWB qui en fournit une image numérisée 2 dont la forme dépend notamment des caractéristiques de réponse de l'antenne de réception ainsi que des déformations dues aux interactions rencontrées. Le signal image subit un traitement d'estimation de paramètres angulaires (direction de départ/arrivée, angles d'incidence sur les surfaces réfléchissantes) permettant de fournir en 3 une estimation brute d'au moins un triplet de paramètres angulaires pour chaque trajet résolu. Grâce à l'exploitation des contraintes géométriques, les configurations impossibles (c'est-à-dire les configurations qui tombent en dehors du domaine de la densité de probabilité exploitée) sont rejetées. Par conséquent, en 4 on retrouve toutes les configurations estimées non impossibles. Ce ou ces triplets sont traités par une fonction d'estimation de caractéristiques environnementales, qui permet de fournir, en 8, des caractéristiques environnementales telles que la position et l'orientation des parois réfléchissantes ainsi que la nature des parois..

S'il s'agit de prédire en 5 un ensemble de formes d'onde élémentaires possibles, on peut optimiser l'algorithme en utilisant les contraintes géométriques, de façon à limiter le nombre des formes d'onde élémentaires. On peut utiliser aussi pour cette prédiction des connaissances électromagnétiques a priori qu'on possède. Ces connaissances sont de deux ordres : connaissances *a priori* déterministes en 6 (sur les antennes, leur réponse, sur les caractéristiques électromagnétiques des matériaux qui peuvent engendrer des réflexions, etc.) ou encore connaissances *a priori* statistiques en 7 (probabilité d'avoir telle interaction en fonction du temps d'arrivée de l'onde, probabilité d'avoir tels angles d'incidence aux surfaces en fonction de la nature de la géométrie de la pièce, etc.). Ces connaissances peuvent servir à la prédiction de formes d'onde élémentaires qui sont utilisées par la fonction d'estimation de paramètres angulaires (direction de départ/arrivée, angles d'incidence sur les surfaces réfléchissantes), notamment dans l'opération de recherche des maxima de ressemblance, mais elles peuvent servir aussi directement dans la fonction d'estimation de paramètres angulaires pour limiter les calculs effectués. Par exemple, une probabilité faible d'avoir tel ou tel triplet de paramètres angulaires dans un scénario *indoor* peut servir à éliminer des solutions peu plausibles.

Sur la figure 14, le diagramme représente plus en détail la fonction d'estimation de paramètres angulaires (direction de départ/arrivée, angles d'incidence sur les surfaces réfléchissantes) qui reçoit en 2 le signal image élaboré dans le récepteur (cf. figure 13). Si on procède par itération comme expliqué précédemment, une soustraction est opérée dans un soustracteur qui reçoit le signal ainsi qu'une forme d'onde (en 7a) reconstituée et recalée temporellement dans la fenêtre temporelle analysée précédemment. Le résultat de la soustraction, en 1 a, subit à chaque itération un nouveau fenêtrage temporel qui est défini en fonction d'une estimation d'énergie du signal en 1a résultant de la soustraction.

Une fonction d'estimation d'énergie établit en 2a une commande de définition de fenêtre qui sert par ailleurs au recalage temporel de la forme d'onde reconstituée après la recherche de ressemblance pour que la soustraction soit synchronisée par rapport à la fenêtre analysée. La commande de fenêtrage peut résulter de la détection de position temporelle d'un pic d'énergie dans la forme d'onde reçue en 1 a.

Le signal après fenêtrage (en 3a) est utilisé dans les comparaisons avec les formes d'onde prédites ; un sous-ensemble de formes d'onde prédites est fourni en 4a par une base de données de formes d'onde élémentaires. Le contenu de la base de données sert non seulement aux étapes de la comparaison (par corrélation ou non) mais aussi à la reconstitution de la forme d'onde à soustraire dans le processus itératif. Les formes d'onde élémentaires sont sélectionnées (en 5) parmi toutes les formes stockées, en fonction de la prédiction effectuée (cf figure 13).

Le comparateur de formes d'onde fournit une estimation d'un triplet de paramètres angulaires en 6a, estimation qui peut cependant comporter encore une ambiguïté entre l'émetteur et le récepteur du fait de la symétrie de propagation électromagnétique. L'estimation en 6a peut être raffinée, pour lever notamment cette ambiguïté, par la mise en oeuvre de contraintes statistiques fournies en 7, et ce n'est qu'après ce raffinement qu'un triplet de paramètres angulaires est fourni en 3 par la fonction d'estimation de paramètres angulaires. Le comparateur de formes d'onde fournit aussi des éléments (en 5a), tels qu'une amplitude et une polarité de signal estimées, qui peuvent servir à la reconstitution de la forme d'onde prédite en vue de sa soustraction.

En ce qui concerne la comparaison de formes d'onde, on a décrit précédemment en détail le cas où cette comparaison est faite par des étapes successives de calculs d'inter-corrélation. On notera que tout dispositif et/ou méthode autorisant une confrontation des formes d'onde de référence avec l'image du signal reçu et fenêtre en vue de restituer le triplet de paramètres angulaires correspondant aux trajets détectés peut être utilisé en substitution. A titre d'exemple, un réseau de neurones peut être envisagé pour apprendre des formes d'onde de référence avec un vecteur d'entrée composé d'échantillons issus de ces formes d'onde, ou encore de toute représentation adéquate de ces formes d'onde (par exemple des coefficients de décomposition selon une base de fonctions ondelettes, etc.)

Pour préciser l'utilisation de connaissances *a priori* statistiques, mentionnées ci-dessus en référence à la figure 13, on peut donner un exemple dans un cas simple à deux dimensions (2D). Supposons qu'un émetteur et un récepteur soient dans une pièce rectangulaire, dont le rapport entre les deux dimensions du rectangle est R_{D}. Supposons ainsi que les coordonnées de ces deux noeuds soient distribuées comme des variables uniformes dans la pièce, alors on est capable d'écrire la densité de probabilité conjointe des angles d'incidence sur les surfaces.

En notant
(θ_{*i*,1}, θ_{*i*,2}, θ_{*i*,3}, θ_{*i*,4})
les angles d'incidence sur les surfaces de la pièce rectangulaire, alors on peut écrire leur densité de probabilité conjointe comme suit : $\begin{matrix}{f}_{{Θ}_{̲}} \left({θ}_{i , 1}, {θ}_{i , 2}, {θ}_{i , 3}, {θ}_{i , 4}\right) = \\ ξ ⁢ \frac{γ \left({θ}_{i , 1}\right) ⁢ γ \left({θ}_{i , 2}\right) ⁢ γ \left({θ}_{i , 3}\right) ⁢ γ \left({θ}_{i , 4}\right) tan {θ}_{i , 1} tan {θ}_{i , 2} tan {θ}_{i , 3} tan {θ}_{i , 4}}{{\left( tan {θ}_{i , 1}+ tan {θ}_{i , 3}\right)}^{3} ⁢ {\left( tan {θ}_{i , 2}+ tan {θ}_{i , 4}\right)}^{3}}\end{matrix}$
si les angles appartiennent à un domaine D: $\left({θ}_{i , 1}, {θ}_{i , 2}, {θ}_{i , 3}, {θ}_{i , 4}\right) ∈ D$
avec $γ \left({θ}_{i , n}\right) = 1 + {tan}^{2} \left({θ}_{i , n}\right)$
et $ξ = \frac{γ \left({θ}_{i , 1}\right) ⁢ γ \left({θ}_{i , 2}\right) ⁢ γ \left({θ}_{i , 3}\right) ⁢ γ \left({θ}_{i , 4}\right) tan {θ}_{i , 1} tan {θ}_{i , 2} tan {θ}_{i , 3} tan {θ}_{i , 4}}{{\left( tan {θ}_{i , 1}+ tan {θ}_{i , 3}\right)}^{3} ⁢ {\left( tan {θ}_{i , 2}+ tan {θ}_{i , 4}\right)}^{3}} ⁢ d ⁢ {θ}_{i , 1} ⁢ d ⁢ {θ}_{i , 2} ⁢ d ⁢ {θ}_{i , 3} ⁢ d ⁢ {θ}_{i , 4}$

Le domaine *D* est défini implicitement par le système d'inéquations suivant : ${ \begin{matrix}{R}_{D} tan {θ}_{i , 2} tan {θ}_{i , 3} + {R}_{D} tan {θ}_{i , 1} tan {θ}_{i , 2} - tan {θ}_{i , 1} tan {θ}_{i , 2} tan {θ}_{i , 3} - tan {θ}_{i , 1} tan {θ}_{i , 3} tan {θ}_{i , 3} > 0 \\ tan {θ}_{i , 3} tan {θ}_{i , 4} + tan {θ}_{i , 2} tan {θ}_{i , 3} - {R}_{D} tan {θ}_{i , 1} tan {θ}_{i , 2} tan {θ}_{i , 4} - {R}_{D} tan {θ}_{i , 2} tan {θ}_{i , 3} tan {θ}_{i , 4} > 0 \\ {R}_{D} tan {θ}_{i , 1} tan {θ}_{i , 2} tan {θ}_{i , 4} + {R}_{D} tan {θ}_{i , 2} tan {θ}_{i , 3} tan {θ}_{i , 4} - tan {θ}_{i , 1} tan {θ}_{i , 4} - tan {θ}_{i , 1} tan {θ}_{i , 2} < 0 \\ tan {θ}_{i , 1} tan {θ}_{i , 3} tan {θ}_{i , 4} + tan {θ}_{i , 1} tan {θ}_{i , 2} tan {θ}_{i , 3} - {R}_{D} tan {θ}_{i , 3} tan {θ}_{i , 4} - {R}_{D} tan {θ}_{i , 1} tan {θ}_{i , 4} < 0\end{matrix}$

Pour toute valeur de (θ_{*i*,1}, θ_{*i*,2}, θ_{*i*,3}, θ_{*i*,4}) n'étant pas dans D, la densité conjointe
ƒ_{θ} (θ_{*i*,1}, θ_{*i*,2}, θ_{*i*,3}, θ_{*i*,4})

Vaut 0. On peut alors éliminer les descripteurs donnant lieu à des aberrations géométriques (c'est-à-dire dont l'évaluation de la densité conjointe des angles d'incidence est nulle) en s'appuyant sur des *a priori* statistiques.

En résumé l'invention permet :
a) d'estimer les directions de départ, d'arrivée, et les angles d'incidence sur les surfaces réfléchissantes, associés à des trajets ayant subi des historiques d'interaction particuliers (par exemple un trajet direct, une réflexion simple, etc.) pour une liaison radio point à point entre deux dispositifs UWB à partir d'une seule antenne par dispositif et en s'appuyant sur des liaisons de communications sans-fil simultanées (par opposition aux techniques traditionnelles de sondage radar, multi-antennes, et/ou à balayage d'antennes) ;
b) d'estimer des paramètres environnementaux du milieu de propagation dans les mêmes conditions qu'au point a (par exemple présence de surfaces réfléchissantes et position des points de réflexion, nature diélectrique de ces surfaces, orientation de ces surfaces ...) ;
c) de fournir une cartographie locale de l'environnement (c'est-à-dire à l'échelle de la pièce) à partir de l'estimation (potentiellement conjointe) des directions de départ, d'arrivée, des angles d'incidence sur les surfaces réfléchissantes et/ou des temps d'arrivée des trajets dans les mêmes conditions qu'au point a ;
d) d'estimer la position du couple de dispositifs radio UWB (en relatif) au sein de la pièce qu'ils occupent, dans les mêmes conditions qu'en a ;
e) en se fondant sur une connaissance préalable du plan du bâtiment et sur l'étape précédente, de positionner sans infrastructure ni noeuds de référence supplémentaires (dont les positions seraient connues a priori) le couple de dispositifs radio UWB au sein du bâtiment qu'ils occupent (le positionnement étant potentiellement absolu), dans les mêmes conditions qu'en a ;
f) en se fondant sur l'un ou plusieurs des points précédents, et sur des liens de communication UWB, d'échanger les informations disponibles (par exemple les positions absolues et/ou relatives des noeuds, les cartographies locales du bâtiment, etc.) et d'assurer le relais de ces informations en n'importe quel point du réseau composés de dispositifs UWB ;
g) à partir du point a, et en utilisant en réception toute technique permettant que le système soit spatialement adapté aux directions privilégiées de l'espace attribuées aux trajets les plus énergétiques (par exemple formation de faisceau, antennes sectorisées, antennes reconfigurables, antennes déformantes ..., et algorithmes associés) d'améliorer la qualité (c'est-à-dire le rapport signal à bruit) et/ou la sécurité du lien radio ;
h) dans les mêmes conditions qu'en g, d'améliorer les performances d'estimation de distance relative, de positionnement, et/ou de poursuite des noeuds mobiles.

Le système de communication comprendra éventuellement des moyens spécifiques selon l'application qui est envisagée, notamment dans les cas suivants :
- lorsque les informations obtenues sur l'environnement sont utilisées pour optimiser le routage des communications dans le réseau ;
- lorsque les informations doivent servir à aider l'orientation de personnes aveugles ou placées dans des conditions de mauvaise visibilité (présence de fumée, absence de lumière) dans un bâtiment ;
- lorsque les informations servent à optimiser une égalisation spatiale d'une chaîne de musique haute fidélité ou d'un autre système de sonorisation dans un bâtiment ;
- lorsque les informations servent à détecter des changements survenus dans l'environnement et notamment dans un bâtiment en relation avec des paramètres physiques tels que la température ou la présence de gaz ou fumées ou encore la présence d'intrus, y compris pour la production d'une alarme.

## Revendications

1. Procédé d'aide à la caractérisation d'environnement utilisant un réseau de communication sans fil mufti-noeuds ultra-large bande, comprenant l'émission de signaux radiofréquences impulsionnels par un noeud radio émetteur (EMT) disposant d'une antenne d'émission (ANT-E) et la réception du signal correspondant par un noeud radio récepteur (RCV) différent du noeud émetteur et disposant d'une antenne de réception (ANT-R), le procédé comportant :
- le stockage, dans une mémoire (MEM) associée au récepteur, d'une série de descripteurs de formes d'onde élémentaires prédites, chaque descripteur correspondant à une forme d'onde élémentaire attendue au niveau du récepteur pour une interaction déterminée entre l'onde électromagnétique émise par l'antenne d'émission et des matériaux constitutifs de surfaces potentiellement présentes dans l'environnement qui peuvent affecter la propagation de l'onde jusqu'au récepteur,
- la numérisation du signal reçu et la détermination de plusieurs portions temporelles de la forme d'onde de signal reçu qui, en raison de leur distribution temporelle d'énergie, sont susceptibles de contenir une des formes d'onde prédites et de correspondre à l'arrivée d'un même signal impulsionnel ayant suivi plusieurs trajets d'orientations différentes entre le noeud émetteur et le noeud récepteur,
- la comparaison entre d'une part un descripteur du signal reçu pour chacune de ces portions temporelles et d'autre part plusieurs descripteurs de formes d'onde prédites stockés dans la mémoire ou calculés à la volée à partir des descripteurs stockés ces descripteurs étant fonction d'un angle d'émission et ou de réception,
- la sélection pour chaque portion temporelle d'un descripteur pour lequel la comparaison indique une ressemblance entre la forme prédite et la portion temporelle de forme reçue,
- le stockage d'une information sur chaque descripteur ainsi sélectionné et sur la position dans le temps de la portion temporelle correspondante, représentant une information de présence et de position dans l'environnement d'un objet remarquable qui cause une interaction correspondant à l'interaction associée au descripteur sélectionné.

2. Procédé selon la revendication 1, **caractérisé en ce que** certains descripteurs de forme d'onde prédite sont associés chacun à un triplet de paramètres angulaires déterminés, qui sont une direction d'émission AE, référencée par rapport à l'antenne d'émission, et une direction de réception AR, référencée par rapport à l'antenne de réception, un angle d'incidence sur une surface réfléchissante, référencé par rapport à la direction normale à la surface, et à un paramètre électromagnétique PE qui est porteur d'une information sur le matériau type constituant la surface réfléchissante, la forme d'onde associée à ce descripteur étant la forme d'onde prédite dans le cas où l'antenne de réception reçoit selon la direction AR une onde électromagnétique impulsionnelle émise par l'antenne d'émission selon la direction AE, après une réflexion sous cet angle d'incidence sur une surface dont les caractéristiques électromagnétiques sont représentées par le paramètre PE.

3. Procédé selon la revendication 2, **caractérisé en ce que** l'information de présence et de position représente une position et une orientation de surface réfléchissante pour les ondes électromagnétiques, la position étant l'intersection d'une droite passant par l'antenne d'émission et dirigée selon la direction d'émission AE correspondant au descripteur sélectionné et d'une droite passant par l'antenne de réception et dirigée selon la direction de réception AR correspondant au descripteur sélectionné, et l'orientation étant celle d'un plan perpendiculaire à la bissectrice de ces deux droites.

4. Procédé selon l'une des revendications 1 à 3, **caractérisé en ce que** la position temporelle d'une portion de forme d'onde reçue, pour laquelle un descripteur a été sélectionné, est déterminée et utilisée pour établir ou confirmer l'information de position de l'objet remarquable.

5. Procédé selon la revendication 1, **caractérisé en ce que** certains descripteurs de forme d'onde sont associés à un triplet de paramètres angulaires qui sont une direction d'émission AE référencée par rapport à l'antenne d'émission, une direction de réception AR référencée par rapport à l'antenne de réception, et un angle d'incidence sur une surface réfléchissante, référencé par rapport à la direction normale à la surface.

6. Procédé selon l'une des revendications 1 à 5, **caractérisé en ce que** certains descripteurs sont associés à des matériaux particuliers et représentent les formes d'onde prédites associées à une diffraction d'onde électromagnétique sur les bords d'objets réalisés dans ces matériaux.

7. Procédé selon l'une des revendications 1 à 6, **caractérisé en ce que** la comparaison entre la forme d'onde de signal reçu et les formes d'onde prédites dont les descripteurs sont dans la mémoire se fait par comparaison de descripteurs stockés dans la mémoire et de descripteurs calculés par le récepteur à partir de la forme d'onde reçue.

8. Procédé selon l'une des revendications 1 à 7, **caractérisé en ce que** la numérisation de formes d'ondes de signal reçu est effectuée pour une série d'impulsions successivement émises par l'antenne d'émission.

9. Procédé selon l'une des revendications 1 à 8, **caractérisé en ce que**, après sélection d'un descripteur particulier pour une portion temporelle déterminée de la forme d'onde reçue, on soustrait à la forme d'onde reçue la forme d'onde prédite correspondant à ce descripteur, en la calant sur cette portion temporelle, et on recommence la détermination de portions temporelles et la comparaison avec des formes prédites en utilisant comme signal reçu le résultat de cette soustraction.

10. Procédé selon l'une des revendications précédentes, **caractérisé en ce que** le noeud radio émetteur émet plusieurs signaux impulsionnels successifs identiques décalés d'intervalles de temps déterminés, on effectue une intégration cohérente des signaux reçus en compensant au niveau du récepteur les intervalles de temps qui les séparent, pour produire un signal reçu équivalent ayant un rapport signal/bruit amélioré, et on utilise la forme d'onde de ce signal reçu équivalent pour effectuer les comparaisons avec les formes d'onde prédites.

11. Procédé selon l'une des revendications 1 à 10, **caractérisé en ce qu'**il comprend une itération des calculs pour chaque fenêtre temporelle correspondant à un trajet d'onde remarquable présent dans le signal reçu, et l'estimation d'une configuration d'environnement probable en fonction des informations détectées pour chaque fenêtre temporelle.

12. Système de communication sans fil comprenant un réseau de plusieurs noeuds d'émission/réception ultra-large bande, parmi lesquels au moins un noeud (EMT) disposant d'une antenne d'émission (ANT-E) pour émettre dans le réseau des signaux de communication impulsionnels, et au moins un noeud (RCV) différent du noeud émetteur et disposant d'une antenne de réception (ANT-R) capable de recevoir des signaux correspondant aux signaux émis, le système comportant :
- une mémoire (MEM) contenant une série de descripteurs de formes d'onde prédites, chaque descripteur correspondant à une forme d'onde élémentaire de signal attendu au noeud récepteur pour une interaction déterminée entre l'onde électromagnétique émise par l'antenne d'émission et des objets potentiellement présents dans l'environnement qui peuvent affecter la transmission de cette onde dans son trajet jusqu'à sa réception par le récepteur,
- des moyens de numérisation (NUM) de la forme d'onde d'un signal reçu et des moyens (CALC) pour déterminer plusieurs portions temporelles de la forme d'onde de signal reçu qui, en raison de leur distribution temporelle d'énergie, sont susceptibles de contenir une des formes d'onde prédites et de correspondre à l'arrivée d'un même signal impulsionnel ayant suivi plusieurs trajets d'orientations différentes entre le noeud émetteur et le noeud récepteur,
- des moyens de comparaison (CALC) entre d'une part un descripteur du signal reçu pour chacune de ces portions temporelles et d'autre part plusieurs descripteurs de formes d'onde prédites stockés dans la mémoire ou calculés à la volée à partir des descripteurs stockés,
- des moyens (CALC) pour sélectionner, pour chaque portion temporelle, un descripteur pour lequel la comparaison indique une ressemblance entre la forme prédite correspondante et la portion temporelle de signal reçu,
- et des moyens pour stocker une information sur chaque descripteur ainsi sélectionné et la position dans le temps de la portion temporelle correspondante, représentant une information de présence et de position dans l'environnement d'un objet remarquable qui cause une interaction correspondant à l'interaction associée au descripteur sélectionné.

13. Système selon la revendication 12, caractérisé en qu'il comprend en outre des moyens pour optimiser le routage de la communication dans le réseau à partir des informations d'environnement obtenues.

14. Système selon l'une des revendications 12 et 13, **caractérisé en ce qu'**il comprend en outre des moyens pour aider à l'orientation de personnes aveugles ou placées dans des conditions de mauvaise visibilité dans un bâtiment, à partir des informations d'environnement obtenues.

15. Système selon l'une des revendications 12 et 13, **caractérisé en ce qu'**il comprend en outre des moyens pour optimiser une égalisation spatiale d'une chaîne de musique haute fidélité ou d'un autre système de sonorisation dans un bâtiment, à partir des informations d'environnement obtenues.

16. Système selon l'une des revendications 12 et 13, **caractérisé en ce qu'**il comprend en outre des moyens pour détecter des changements en relation avec des paramètres physiques tels que la température ou la présence de gaz ou fumées ou encore la présence d'intrus, y compris pour la production d'une alarme, à partir des informations d'environnement obtenues.

## Claims

1. A method for aiding environmental characterization using an ultra-wideband multi-node wireless communication network, comprising the emission of impulse radiofrequency signals by a radio emitter node (EMT) having an emission antenna (ANT-E) and the reception of the corresponding signal by a radio receiver node (RCV) different from the emitter node and having a reception antenna (ANT-R), the method comprising:
- the storage, in a memory (MEM) associated with the receiver, of a series of descriptors of predicted elementary waveforms, each descriptor corresponding to an elementary waveform expected at the level of the receiver for a determined interaction between the electromagnetic wave emitted by the emission antenna and constituent materials of surfaces potentially present in the environment which may affect the propagation of the wave up to the receiver,
- the digitization of the signal received and the determination of one or more temporal portions of the waveform of signal received which, because of their temporal distribution of energy, are apt to contain one of the predicted waveforms and to correspond to the arrival of one and the same impulse signal having followed several paths of different orientations between the emitter node and the receiver node
- the comparison between on the one hand a descriptor of the signal received for each of these temporal portions and on the other hand several descriptors of predicted waveforms, which descriptors are stored in the memory or calculated on the fly on the basis of the stored descriptors, these descriptors being dependent on an angle of emission and/or of reception,
- the selection for each temporal portion of one descriptor for which the comparison indicates a resemblance between the predicted form and the temporal portion of form received,
- the storage of an item of information about each descriptor thus selected and about the position over time of the corresponding temporal portion, representing an item of information regarding presence and position in the environment of a noteworthy object which causes an interaction corresponding to the interaction associated with the selected descriptor.

2. The method as claimed in claim 1, **characterized in that** certain descriptors of predicted waveform are each associated with a triple of determined angular parameters, which are a direction of emission AE, referenced with respect to the emission antenna, and a direction of reception AR, referenced with respect to the reception antenna, an angle of incidence on a reflecting surface, referenced with respect to the direction normal to the surface, and with an electromagnetic parameter PE which carries an item of information about the type of material constituting the reflecting surface, the waveform associated with this descriptor being the waveform predicted in the case where the reception antenna receives along the direction AR an impulse electromagnetic wave emitted by the emission antenna along the direction AE, after a reflection at this angle of incidence on a surface whose electromagnetic characteristics are represented by the parameter PE.

3. The method as claimed in claim 2, **characterized in that** the presence and position information represents a position and an orientation of a surface reflecting the electromagnetic waves, the position being the intersection of a straight line passing through the emission antenna and directed along the direction of emission AE corresponding to the selected descriptor and of a straight line passing through the reception antenna and directed along the direction of reception AR corresponding to the selected descriptor, and the orientation being that of a plane perpendicular to the bisector of these two straight lines.

4. The method as claimed in one of claims 1 to 3, **characterized in that** the temporal position of a portion of waveform received, for which a descriptor has been selected, is determined and used to establish or confirm the information regarding position of the noteworthy object.

5. The method as claimed in claim 1, **characterized in that** certain waveform descriptors are associated with a triple of angular parameters which are a direction of emission AE referenced with respect to the emission antenna, a direction of reception AR referenced with respect to the reception antenna, and an angle of incidence on a reflecting surface, referenced with respect to the direction normal to the surface.

6. The method as claimed in one of claims 1 to 5, **characterized in that** certain descriptors are associated with particular materials and represent the predicted waveforms associated with an electromagnetic wave diffraction on the edges of objects made from these materials.

7. The method as claimed in one of claims 1 to 6, **characterized in that** the comparison between the waveform of signal received and the predicted waveforms whose descriptors are in the memory is done by comparing descriptors stored in the memory and descriptors calculated by the receiver on the basis of the waveform received.

8. The method as claimed in one of claims 1 to 7, **characterized in that** the digitization of waveforms of signal received is performed for a series of pulses emitted successively by the emission antenna.

9. The method as claimed in one of claims 1 to 8, **characterized in that**, after selection of a particular descriptor for a determined temporal portion of the waveform received, the predicted waveform corresponding to this descriptor is subtracted from the waveform received, while tailoring it to this temporal portion, and the determination of temporal portions and the comparison with predicted forms is recommenced, using the result of this subtraction as signal received.

10. The method as claimed in one of the preceding claims, **characterized in that** the radio emitter node emits several identical successive impulse signals shifted by determined time intervals, a coherent integration of the signals received is performed by compensating at the receiver level for the time intervals which separate them, so as to produce an equivalent signal received having an improved signal/noise ratio, and the waveform of this equivalent signal received is used to perform the comparisons with the predicted waveforms.

11. The method as claimed in one of claims 1 to 10, **characterized in that** it comprises an iteration of the calculations for each time window corresponding to a noteworthy wave path present in the signal received, and the estimation of a probable environmental configuration as a function of the information detected for each time window.

12. A wireless communication system comprising a network of several ultra-wideband emission/reception nodes, including at least one node (EMT) having an emission antenna (ANT-E) so as to emit in the network impulse communication signals, and at least one node (RCV), different from the emitter node and having a reception antenna (ANT-R) capable of receiving signals corresponding to the signals emitted, the system comprising:
- a memory (MEM) containing a series of descriptors of predicted waveforms, each descriptor corresponding to an elementary signal waveform expected at the receiver node for a determined interaction between the electromagnetic wave emitted by the emission antenna and objects potentially present in the environment which may affect the transmission of this wave in its path up to its reception by the receiver,
- digitization means (NUM) for digitizing the waveform of a signal received and means (CALC) for determining one or more temporal portions of the waveform of signal received which, because of their temporal distribution of energy, are apt to contain one of the predicted waveforms and to correspond to the arrival of one and the same impulse signal having followed several paths of different orientations between the emitter node and the receiver node,
- comparison means (CALC) for comparing between on the one hand a descriptor of the signal received for each of these temporal portions and on the other hand several descriptors of predicted waveforms, which descriptors are stored in the memory or calculated on the fly on the basis of the stored descriptors,
- means (CALC) for selecting, for each temporal portion, a descriptor for which the comparison indicates a resemblance between the corresponding predicted form and the temporal portion of signal received,
- and means for storing an item of information about each descriptor thus selected and the position over time of the corresponding temporal portion, representing an item of information regarding presence and position in the environment of a noteworthy object which causes an interaction corresponding to the interaction associated with the selected descriptor.

13. The system as claimed in claim 12, **characterized in that** it furthermore comprises means for optimizing the routing of the communication in the network on the basis of the environmental information obtained.

14. The system as claimed in one of claims 12 and 13, **characterized in that** it furthermore comprises means for aiding the orientation of the blind or of persons placed in conditions of poor visibility in a building, on the basis of the environmental information obtained.

15. The system as claimed in one of claims 12 and 13, **characterized in that** it furthermore comprises means for optimizing a spatial equalization of a high fidelity music rig or of some other public address sound system in a building, on the basis of the environmental information obtained.

16. The system as claimed in one of claims 12 and 13, **characterized in that** it furthermore comprises means for detecting changes in relation to physical parameters such as the temperature or the presence of gas or smoke or else the presence of intruders, including for the production of an alarm, on the basis of the environmental information obtained.

## Patentansprüche

1. Verfahren zur Unterstützung einer Umweltcharakterisierung mittels eines drahtlosen Ultrabreitband-Mehrknoten-Kommunikationsnetzes, das das Aussenden von Radiofrequenz-Impulssignalen durch einen eine Sendeantenne (ANT-E) umfassenden Radiosendeknoten (EMT) und das Empfangen des entsprechenden Signals durch einen Radioempfangsknoten (RCV) beinhaltet, der sich von dem Sendeknoten unterscheidet und eine Empfangsantenne (ANT-R) umfasst, wobei das Verfahren Folgendes beinhaltet:
- Speichern, in einem mit dem Empfänger assoziierten Speicher (MEM), einer Serie von Deskriptoren in Form von vorhergesagten Elementarwellen, wobei jeder Deskriptor einer erwarteten Elementarwellenform am Empfänger für eine bestimmte Interaktion zwischen der von der Sendeantenne ausgesendeten elektromagnetischen Welle und Flächen bildenden Materialien entspricht, die potentiell in der Umgebung vorhanden sind und die die Ausbreitung der Welle zum Empfänger beeinflussen können,
- Digitalisieren des empfangenen Signals und Ermitteln mehrerer Zeitabschnitte der Wellenform des empfangenen Signals, die aufgrund ihrer zeitlichen Energieverteilung dazu neigen, eine der vorhergesagten Wellenformen zu enthalten, und die der Ankunft eines selben Impulssignals entsprechen, das mehreren unterschiedlichen Orientierungswegen zwischen dem Sendeknoten und dem Empfangsknoten gefolgt ist,
- Vergleichen eines Deskriptors des empfangenen Signals für jeden dieser Zeitabschnitte einerseits und mehrerer Deskriptoren von vorhergesagten Wellenformen andererseits, die in dem Speicher gespeichert oder im Flug von den gespeicherten Deskriptoren berechnet werden, wobei diese Deskriptoren von einem Sendewinkel und/oder einem Empfangswinkel abhängig sind,
- Wählen, für jeden Zeitabschnitt, eines Deskriptors, für den der Vergleich eine Ähnlichkeit zwischen der vorhergesagten Form und dem Zeitabschnitt der empfangenen Form anzeigt,
- Speichern einer Information über jeden so gewählten Deskriptor und über die zeitliche Position des entsprechenden Zeitabschnitts, die eine Information über die Anwesenheit und die Position eines speziellen Objektes in der Umgebung repräsentiert, das eine Interaktion bewirkt, die der mit dem gewählten Deskriptor assoziierten Interaktion entspricht.

2. Verfahren nach Anspruch 1, **dadurch gekennzeichnet, dass** bestimmte Deskriptoren der vorhergesagten Wellenform jeweils mit einem Triplett von bestimmten Winkelparametern assoziiert sind, nämlich: einer Senderichtung AE, referenziert mit Bezug auf die Sendeantenne, und einer Empfangsrichtung AR, referenziert mit Bezug auf die Empfangsantenne, einem Einfallswinkel auf einer reflektierenden Fläche, referenziert mit Bezug auf die Richtung normal zur Oberfläche, und einem elektromagnetischen Parameter PE, der Träger einer Information über den Materialtyp ist, der die reflektierende Fläche bildet, wobei die mit diesem Deskriptor assoziierte Wellenform die vorhergesagte Wellenform in dem Fall ist, in dem die Empfangsantenne in der Senderichtung AR eine von der Sendeantenne in der Richtung AE ausgesendete elektromagnetische Impulswelle nach einer Reflexion in diesem Einfallswinkel auf einer Oberfläche empfängt, deren elektromagnetische Charakteristiken durch den Parameter PE repräsentiert werden.

3. Verfahren nach Anspruch 2, **dadurch gekennzeichnet, dass** die Information über Anwesenheit und Position eine Position und eine Orientierung der reflektierenden Fläche für die elektromagnetischen Wellen darstellt, wobei die Position der Schnittpunkt einer Geraden, die durch die Sendeantenne in der Senderichtung AE entsprechend dem gewählten Deskriptor verläuft, und einer Geraden ist, die durch die Empfangsantenne in der Empfangsrichtung AR entsprechend dem gewählten Deskriptor verläuft, und wobei die Orientierung die einer lotrechten Ebene zur Halbierenden dieser beiden Geraden ist.

4. Verfahren nach einem der Ansprüche 1 bis 3, **dadurch gekennzeichnet, dass** die zeitliche Position eines Abschnitts der empfangenen Wellenform, für den ein Deskriptor gewählt wurde, ermittelt und benutzt wird, um eine Information über die Position des speziellen Objektes zu erlangen oder zu bestätigen.

5. Verfahren nach Anspruch 1, **dadurch gekennzeichnet, dass** bestimmte Deskriptoren der Wellenform mit einem Triplett der folgenden Winkelparameter assoziiert sind: eine Empfangsrichtung AE, referenziert mit Bezug auf die Sendeantenne, eine Empfangsrichtung AR, referenziert mit Bezug auf die Empfangsantenne, und ein Einfallswinkel auf eine reflektierende Fläche, referenziert mit Bezug auf die Richtung normal zu der Fläche.

6. Verfahren nach einem der Ansprüche 1 bis 5, **dadurch gekennzeichnet, dass** bestimmte Deskriptoren mit den besonderen Materialien assoziiert sind und die vorhergesagten Wellenformen repräsentieren, die mit einer Beugung einer elektromagnetischen Welle an den Rändern der aus diesen Materialien hergestellten Objekte assoziiert sind.

7. Verfahren nach einem der Ansprüche 1 bis 6, **dadurch gekennzeichnet, dass** der Vergleich zwischen der Wellenform des empfangenen Signals und den vorhergesagten Wellenformen, deren Deskriptoren sich im Speicher befinden, durch Vergleichen von im Speicher gespeicherten Deskriptoren mit von vom Empfänger auf der Basis der empfangenen Wellenform berechneten Deskriptoren erfolgt.

8. Verfahren nach einem der Ansprüche 1 bis 7, **dadurch gekennzeichnet, dass** die Digitalisierung von Wellenformen des empfangenen Signals für eine aufeinander folgende Serie von Impulsen erfolgt, die von der Sendeantenne ausgestrahlt werden.

9. Verfahren nach einem der Ansprüche 1 bis 8, **dadurch gekennzeichnet, dass** nach der Wahl eines bestimmten Deskriptors für einen ermittelten Zeitabschnitt der empfangenen Wellenform die diesem Deskriptor entsprechende vorhergesagte Wellenform von der empfangenen Wellenform subtrahiert wird, indem sie auf diesem Zeitabschnitt verschoben wird, und die Ermittlung von Zeitabschnitten und der Vergleich mit den vorhergesagten Formen unter Nutzung des Ergebnisses dieser Subtraktion als Empfangssignal neu begonnen wird.

10. Verfahren nach einem der vorherigen Ansprüche, **dadurch gekennzeichnet, dass** der Radiosendeknoten mehrere identische aufeinander folgende Impulssignale ausstrahlt, die in bestimmten zeitlichen Intervallen versetzt sind, eine kohärente Integration von empfangenen Signalen durch Zusammensetzen der sie trennenden zeitlichen Intervalle am Empfänger erfolgt, um ein äquivalentes empfangenes Signal mit einem verbesserten Signal-Rausch-Verhältnis zu erzeugen, und die Wellenform dieses äquivalenten empfangenen Signals verwendet wird, um die Vergleiche mit den vorhergesagten Wellenformen durchzuführen.

11. Verfahren nach einem der Ansprüche 1 bis 10, **dadurch gekennzeichnet, dass** es eine Iteration von Berechnungen für jedes Zeitfenster beinhaltet, das einem in dem empfangenen Signal vorhandenen bemerkenswerten Wellenpfad entspricht, und die Schätzung einer wahrscheinlichen Umgebungskonfiguration in Abhängigkeit von für jedes Zeitfenster erkannten Informationen beinhaltet.

12. Drahtloses Kommunikationssystem, das ein Netz mit mehreren Ultrabreitband-Sende-/Empfangsknoten umfasst, darunter wenigstens einen eine Sendeantenne (ANT-E) umfassenden Knoten (EMT) zum Senden von Kommunikationsimpulssignalen in dem Netz, und wenigstens einen Knoten (RCV), der sich von dem Sendeknoten unterscheidet und eine Empfangsantenne (ANT-R) umfasst, der Signale empfangen kann, die den gesendeten Signalen entsprechen, wobei das System Folgendes umfasst:
- einen Speicher (MEM), der eine Serie von Deskriptoren von vorhergesagten Wellenformen enthält, wobei jeder Deskriptor einer erwarteten Signalelementarwellenform am Empfangsknoten für eine bestimmte Interaktion zwischen der von der Sendeantenne ausgesendeten elektromagnetischen Welle und Objekten entspricht, die potentiell in der Umgebung vorhanden sind und die die Übertragung dieser Welle auf ihrem Weg bis zu ihrem Empfang durch den Empfänger beeinflussen können,
- Mittel (NUM) zum Digitalisieren der Wellenform eines empfangenen Signals und Mittel (CALC) zum Ermitteln mehrerer Zeitabschnitte der Wellenform des empfangenen Signals, die aufgrund ihrer zeitlichen Energieverteilung dazu neigen, eine der vorhergesagten Wellenformen zu enthalten, und die der Ankunft eines selben Impulssignals entsprechen, das mehreren unterschiedlichen Orientierungswegen zwischen dem Senderknoten und dem Empfängerknoten gefolgt ist,
- Mittel (CALC) zum Vergleichen eines Deskriptors des empfangenen Signals für jeden dieser Zeitabschnitte einerseits und mehrerer Deskriptoren von vorhergesagten Wellenformen andererseits, die in dem Speicher gespeichert oder im Flug von den gespeicherten Deskriptoren berechnet werden,
- Mittel (CALC) zum Wählen, für jeden Zeitabschnitt, eines Deskriptors, für den der Vergleich eine Ähnlichkeit zwischen der entsprechenden vorhergesagten Form und dem Zeitabschnitt des empfangenen Signals anzeigt, und
- Mittel zum Speichern einer Information für jeden so gewählten Deskriptor und für die zeitliche Position des entsprechenden Zeitabschnitts, die eine Information für die Anwesenheit und die Position eines speziellen Objektes in der Umgebung repräsentiert, das eine Interaktion bewirkt, die der mit dem gewählten Deskriptor assoziierten Interaktion entspricht.

13. System nach Anspruch 12, **dadurch gekennzeichnet, dass** es darüber hinaus Mittel zum Optimieren der Leitwegführung der Kommunikation in dem Netz anhand der erhaltenen Umgebungsinformationen beinhaltet.

14. System nach einem der Ansprüche 12 und 13, **dadurch gekennzeichnet, dass** es darüber hinaus Mittel zum Unterstützen der Orientierung von blinden oder solchen Personen, die sich bei schlechten Sichtbedingungen in einem Gebäude aufhalten, anhand der erhaltenen Umgebungsinformationen beinhaltet.

15. System nach einem der Ansprüche 12 und 13, **dadurch gekennzeichnet, dass** es darüber hinaus Mittel zum Optimieren einer räumlichen Entzerrung einer HiFi-Musikkette oder eines anderen Beschallungssystems in einem Gebäude auf der Basis von erhaltenen Umgebungsinformationen umfasst.

16. System nach einem der Ansprüche 12 und 13, **dadurch gekennzeichnet, dass** es darüber hinaus Mittel zum Erfassen von Änderungen in Bezug auf die physikalischen Parameter wie z.B. die Temperatur oder die Anwesenheit von Gasen oder Rauch oder auch die Anwesenheit von Eindringlingen, einschließlich der Erzeugung eines Alarms, auf der Basis der erhaltenen Umgebungsinformationen umfasst.
